(19) Europäisches Patentamt
European Patent Office
Office européen des brevets

(11)  **EP 3 199 016 B1**

(12)  **EUROPEAN PATENT SPECIFICATION**

(45) Date of publication and mention
of the grant of the patent:
**21.11.2018  Bulletin 2018/47**

(51) Int Cl.:
***A01F 15/07*** *(2006.01)*

(21) Application number: **17153255.9**

(22) Date of filing: **26.01.2017**

(54) **WRAPPING APPARATUS AND METHOD FOR SOFTLY DEPOSITING THE WRAPPED OBJECT ON THE GROUND**

WICKELVORRICHTUNG UND VERFAHREN ZUM SANFTEN ABLEGEN DES GEWICKELTEN OBJEKTS AUF DEM BODEN

APPAREIL D'EMBALLAGE ET PROCÉDÉ POUR DÉPOSER DOUCEMENT L'OBJET EMBALLÉ SUR LE SOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2016  NL 2016179**

(43) Date of publication of application:
**02.08.2017  Bulletin 2017/31**

(73) Proprietor: **Forage Innovations B.V.**
**3147 PB  Maassluis (NL)**

(72) Inventor: **SCHLICHTING, Malte Cornelius**
**3147 PB Maassluis (NL)**

(74) Representative: **AGCO Intellectual Property Department**
**AGCO Limited**
**Abbey Park Stoneleigh**
**Kenilworth, Warwickshire CV8 2TQ (GB)**

(56) References cited:
**EP-A1- 0 893 053      EP-A1- 1 438 889**
**EP-A1- 2 606 715      WO-A1-2010/137968**
**FR-A1- 2 585 922**

**Description**

FIELD OF THE INVENTION

The invention refers to a movable wrapping apparatus and to a wrapping method for wrapping an object and for depositing the wrapped object on the ground by means of a movable wrapping apparatus, in particular for wrapping the entire surface of a round-cylindrical bale made from loose from agricultural crop material into plastic sheet and depositing the wrapped bale.

BACKGROUND OF THE INVENTION

Often it is desired that a vehicle wraps the entire surface of an object into wrapping material. In the agricultural domain such an object to be wrapped often is a bale formed under pressure from loose crop or further agricultural material. The bale is formed by a bale forming apparatus (baler). The circumferential surface of the bale in a baling chamber has to be wrapped such that the bale does not fall apart after being ejected out of the baling chamber. Often it is further desired to wrap the entire surface of such a bale into an impermeable sheet such that no oxygen and/or no fluid can penetrate the wrap. The entire surface of the bale is wrapped outside of the pressing chamber by a wrapping apparatus (wrapper) which is moved over ground. The bale is placed on a supporting part of the wrapper, e.g. on a wrapping table. The bale is rotated and is wrapped into at least one web of wrapping material. The wrapper deposits the wrapped bale on the ground. The wrapper can be connected with the baler or can be operated as a stand-alone wrapper.

In one operating mode the wrapper is stopped when depositing the wrapped object on the ground. Time is saved, however, when the wrapper deposits the wrapped object while the wrapper is still moved over ground. Therefore the wrapped object, e.g. the wrapped bale, is moved with respect to the ground when being deposited and when hitting the ground. Several proposals how to do so have been published.

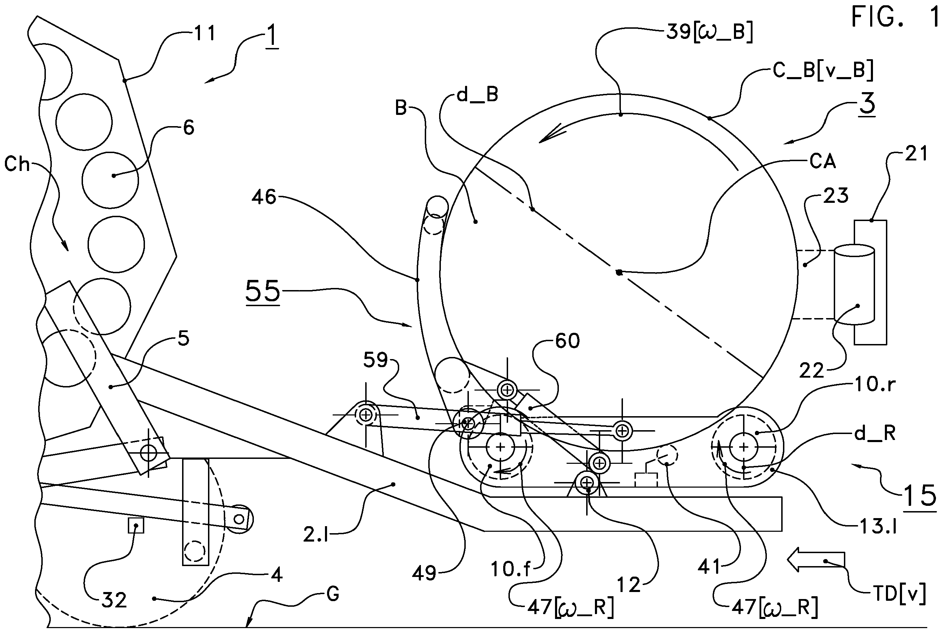

Fig. 1 of EP 2606715 A1 shows a baler-wrapper combination 1 with a wrapper (Wickeleinrichtung 3) positioned behind a round baler (Rundballenpresse 2). The round baler 2 forms a round bale (Rundballen 4). The round bale 4 is transferred onto a wrapping table (Wickeltisch 13) of the wrapper 3. The wrapping table 13 rotates the round bale 4 around the bale's center axis (perpendicular to the drawing plane of Fig. 1). The wrapping material dispenser (Wickelarm 14) holds a foil reel (Folienrolle 15). This dispenser 14 is guided around the rotated bale 4 on the wrapping table 13. Thereby the entire surface of the bale 4 on the wrapping table 13 is wrapped.

During operation the combination 1 of EP 2606715 A1 is moved over ground in a travelling direction F. For depositing the wrapped bale 4 onto the ground, the wrapping table 13 of EP 2606715 A1 is pivoted around an axis 16 which is parallel to the bale's center axis and is perpendicular to the travelling direction F. The pivoting velocity (Kippgeschwindigkeit) and the pivoting angle (Kippwinkel) of the wrapping table 13 can be adapted. In one application a controller (Steuer- und Regeleinrichtung) of the baler-wrapper combination 1 is connected with the controller of a pulling vehicle. A tachometer mounted on board of the pulling vehicle measures the travelling velocity of the arrangement comprising the pulling vehicle and the baler-wrapper combination 1. The tilting velocity of the wrapping table 13 is adapted to the measured travelling velocity of the baler-wrapper combination 1, cf. par. [0020]. The higher the travelling velocity is, the higher is the tilting velocity of the wrapping table 13. It is also possible to amend the pivoting velocity or pivoting angle to the measured diameter of the wrapped bale 4.

Fig. 1 of EP 1138189 B1 shows a baler-wrapper combination M with a round baler (Rundballenpresse P) and a wrapper (Wickler W). The round baler P forms a round bale in a pressing chamber (Presskammer 7). After the bale is formed, the baler tailgate (Heckklappe 4) is opened, and the formed bale is transferred onto a wrapping table (Wickeltisch D) of the wrapper W. The wrapping table D rotates a bale B2 to be wrapped around an axis perpendicular to the travelling direction. A hydraulic actuator 10 can pivot the wrapping table D around a horizontal axis 12 perpendicular to the travelling direction. The wrapping table D is pivoted towards the pressing chamber 7 for taking a bale and is pivoted backwards for depositing a wrapped bale onto the ground. A controller (Steuervorrichtung C) controls the positioning device (Stelltrieb S) with the actuator 10 for the wrapping table D. At least one sensor E1 to E4 measures the amount of crop material in the pressing chamber or the weight of a bale in the pressing chamber. The wrapped bale B2 is deposited on the ground after the weight of the crop material in the pressing chamber 7 exceeds a given threshold. Therefore it is inhibited that the step of depositing a bale on the ground makes the baler-wrapper combination M tilting or becoming otherwise instable.

Fig. 1 of US 20080041028 A1 shows a round baler 10 with a bale chamber 20. This bale chamber 20 can be of variable size or constant size. A crop receiver 18 picks up crop material from the ground. A feed apparatus 22 with a conveying rotor conveys the picked-up crop material through an inlet 30 into the bale chamber 20. A round bale is formed in the bale chamber 20 and is rotated.

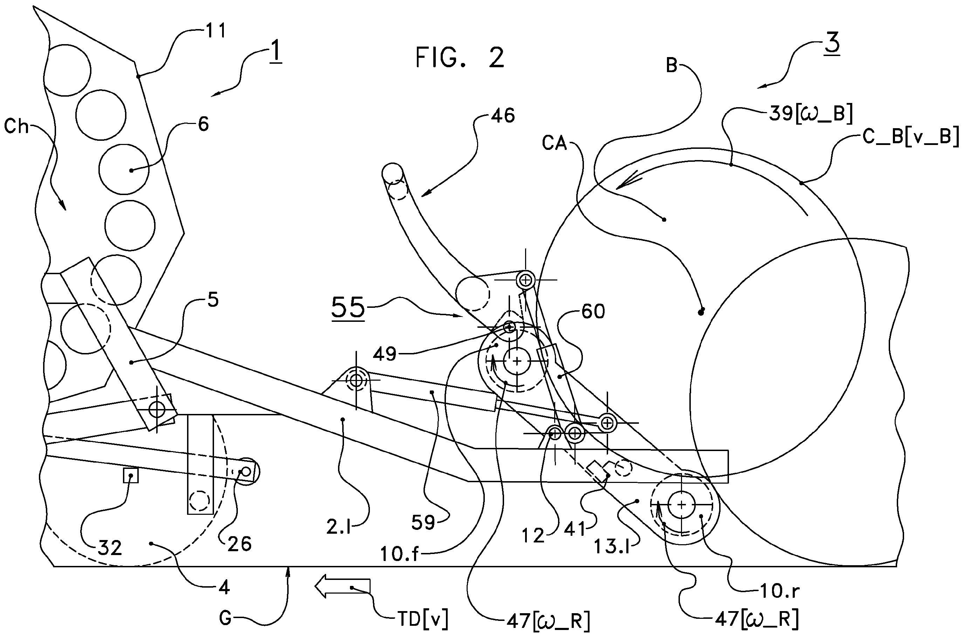

Fig. 2 of US 20080041028 A1 shows an unloading apparatus 24. The function of this unloading apparatus 24 is as follow, cf. par. [0034]: A round bale which has been released from the bale chamber 20 rolls gradually onto the ground. The unloading apparatus 24 is connected to the frame (superstructure 12) of the round baler 10. The unloading apparatus 24 comprises two carrying elements (rollers) 34 mounted between two carrying arms 42, a cylindrical tubular cover 40, and bumpers 38 at the rear end. Fig. 5 shows a further embodiment in which the carrying element 34 is implemented as a continuous belt or band. This belt 34 is guided around the cover 40 and around a return roller 58. One task of the carrying element 34 is to prevent the deposited bale from rolling back towards the bale chamber, cf. pars. [0042] and [0043].

FR 2585922 A1 discloses a round baler which forms a round-cylindrical bale in a pressing chamber and ejects the formed bale. The bale is rotated by the bale forming means while the bale is in the pressing chamber. The object of FR 2585922 A1 is to avoid that the rotation of the bale is significantly decelerated when being ejected out of the pressing chamber [la balle, en rotation dans la chambre de formation, était freinée par le contact avec des surfaces (barres, plaques métalliques) fixes]. This object is achieved by means of a ramp 6 guiding the bale on the ground. The ramp provides a mobile surface such that the bale substantially keeps its rotating velocity (surface dont la vitesse de déplacement peut être de la même grandeur que la vitesse linéaire superficielle de rotation de la balle).

Fig. 1 of FR 2585922 A1 shows this ramp. In one embodiment a sequence of rollers (série de rouleaux 7) is positioned along this ramp 6. A round bale rolls over this sequence of rollers 7 to the ground. The rollers can freely rotate (pouvant tourner librement). In a further embodiment the sequence of idler rollers 7 is replaced with a plurality of balls (boules) or an idler conveyor belt (tapis roulants). In yet a further embodiment at least one part of the ramp is driven [entraînée(s)]. The task of this movement is again that the rotational velocity of the bale is an adequate one (de façon a avoir une vitesse superficielle de déplacement convenable). This movable part of the ramp 6 is driven by the motor of the baler. In one embodiment the ramp 6 for depositing the bale can pivot around an axle 8. A mechanical connection 9 connects the ramp 6 with an actuator 5 for the tailgate.

Fig. 1 of EP 2974592 A1 discloses a baler 14 which is pulled by a tractor 12. The baler 14 forms a bale 23 by means of a baler mechanism 18. A formed bale 23 is transferred onto a discharge mechanism 28 with a bale carrier 29 belonging to a crop accumulator 20, cf. Fig. 2. The bale carriage 29 is pivotally connected to several structural members 26. For damping a bale 23 on the ground the bale carriage 29 is pivoted around the carriage axis 44, cf. Fig. 2, Fig. 4, Fig. 5, Fig. 6, Fig. 7. Fig. 12 shows a system 70 which controls the speed of harvested crop as it is discharged from the crop accumulator 20. A speed measurement device 72 measures the forward travel speed of the crop accumulator 20. The rearward travel speed of the discharge mechanism 28 is adapted to the forward travel speed of the crop accumulator 20. The effect: Harvested crop is discharged with a rearward travel speed that is substantially equal to the forward travel speed. The harvested crop has a substantially zero relative speed as it contacts the ground.

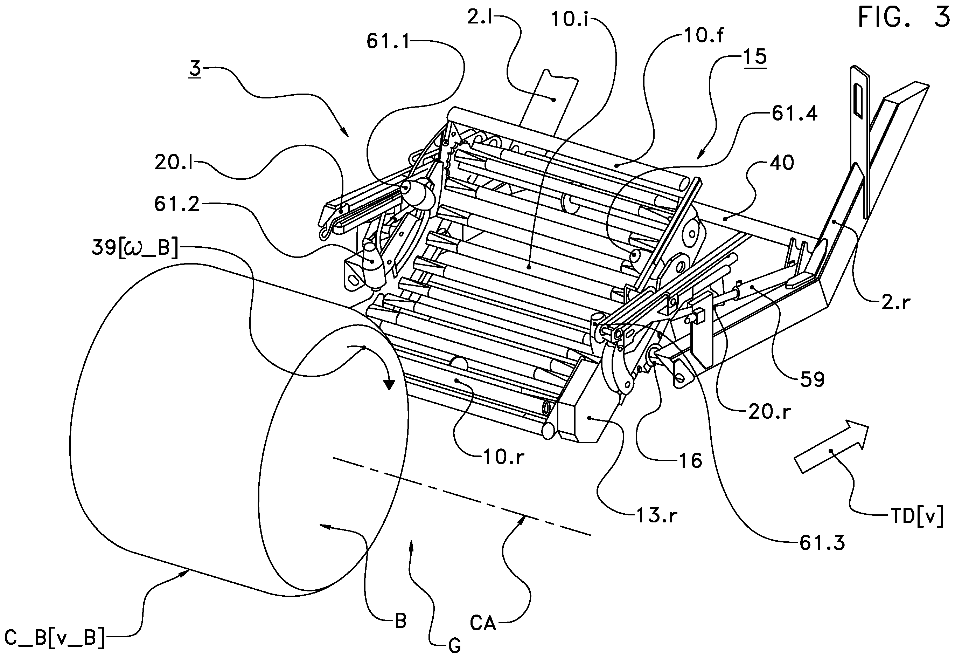

Fig. 1 of US 4375187 shows a round baler 10 which forms a round bale by means of a bottom conveyor 22 and a serious of three upper conveyor assemblies 32, 36, 38. The bottom conveyor 22 comprises a plurality of side-by-side belts which are guided over four rollers 24, 26, 28, 30. In a sidewall 48 of the baler 10 a wedge-shaped component 46 is mounted such that the wedge 46 touches a front face of a round bale 14, cf. Fig. 2 and Fig. 7. Fig. 2 shows a situation in which the bale 14 has readily been formed and wrapped and in which the tailgate 44 with the three upper conveyor assemblies 32, 34, 36 is opened. The bottom conveyor 22 is moved and rotates the bale 14 in a clockwise direction. The wedge 46 decelerates the rotation of the bale 14. The bale 14 is lifted over the rear guiding roller 30 of the bottom conveyor 22 and rolls downward on the ground, cf. Fig. 3.

Fig. 1 of DE 3031865 C2 shows a round baler with a chassis (Fahrgestell 1), a front housing (Vordergehäuse 3) rigidly mounted on the chassis 1, and a pivotal tailgate (aufklappbares Hintergehäuse 4). The drum-shaped pressing room is limited by two opposing sidewalls (Seitenwände 6, 7), a bottom conveyor (Förderboden 8), and five consecutive conveyors 8 to 13. These five conveyors 8 to 13 convey a round bale in the pressing room clockwise in the direction 14. Three conveyors 9, 10, 11 are mounted at the pivotal tailgate 4. The further conveyors 12 and 13 are mounted at the stationary front housing 3. The conveyor 11 is positioned adjacent to the pivoting axis 5 of the tailgate 4, cf. Fig. 2. For ejecting a round bale out of the pressing chamber, the tailgate 4 is opened. When the tailgate 4 is open, the movement of the conveyor 11 adjacent to the pivoting axis 5 is blocked. Fig. 2 shows one mechanical implementation how to achieve this desired temporary blockage.

SUMMARY OF THE INVENTION

A problem solved by the invention is to provide a wrapping apparatus with the features of the preamble of claim 1 and a wrapping method with the features of the preamble of claim 16 wherein the risk is reduced that the wrap around the object is damaged when the moved wrapping apparatus deposits the rotated and wrapped object on the ground without the need of tilting the object supporting device around a tilting angle wherein the tilting step is adapted to the travelling velocity.

This problem is solved by a wrapping apparatus with the features of claim 1 and by a wrapping method with the features of claim 16. Preferred embodiments are specified in the depending claims.

The wrapping apparatus according to the invention comprises

-    a wrapping apparatus frame,
-    an object supporting device for carrying an object to be wrapped,
-    an object rotating device, and
-    at least one reservoir holder for holding a reservoir of wrapping material.

The wrapping apparatus frame carries the object supporting device. The object rotating device can rotate the object on the object supporting device with respect to the wrapping apparatus frame with a rotational velocity. This rotational velocity is variable and is or can automatically be selected out of a set or range of different possible rotational velocities.

The wrapping method according to the invention is performed by using such a wrapping apparatus.

The wrapping apparatus is arranged to operate as follows and the method comprises the following steps:

-    An object to be wrapped is placed onto the object supporting device.
-    The object is carried by the object supporting device.
-    The object rotating device rotates the object on the object supporting device with respect to the wrapping apparatus frame around an object rotating axis. This object rotating axis is perpendicular to the travelling direction at least in the end of the wrapping procedure.
-    Thanks to this rotational movement the object is also moved with respect to the or at least one reservoir holder. Thanks to the rotational movement the carried and rotated object is wrapped into at least one web of wrapping material. The or every web is taken from the or one respective wrapping material reservoir held by the or one reservoir holder.
-    The wrapped object is removed from the object supporting device.
-    The removed wrapped object is deposited on the ground.

According to the invention the wrapping apparatus is further arranged to operate as follows and the method comprises the following further steps:

-    The wrapping apparatus is moved over ground in a travelling direction with a travelling velocity.
-    A value indicative of the current travelling velocity is measured.
-    The object rotating device keeps or achieves a rotation of the object carried on the object supporting device at least before the object is removed from the object supporting device. While being carried on the object supporting device and being wrapped, the object is rotated with respect to the wrapping apparatus frame around the object rotating axis.
-    This rotation is kept or achieved such that the object is rotated with respect to the wrapping apparatus frame with a selected and controlled rotational velocity around the object rotating axis at least before being removed from the object supporting device.
-    This selected rotational velocity depends on at least one measured value. The or at least one measured value used for selecting the velocity is indicative of the measured current travelling velocity. The wrapping apparatus is moved over ground with this measured current travelling velocity at least when removing the wrapped object from the object supporting device.

ADVANTAGES

According to the invention the wrapping apparatus (wrapper) can remove and deposit the wrapped object while the wrapping apparatus is moved over ground. As soon as the wrapped object is removed from the object supporting device, a further object to be wrapped can be placed on the object supporting device. As the wrapped object can be removed from the wrapping apparatus while the wrapping apparatus moves over ground, it is not necessary to interrupt the movement of the wrapping apparatus over ground for the purpose of depositing the wrapped object on the ground. This operation without interruption saves time and increases the throughput of the wrapper - compared with a wrapper which always stops for the sake of depositing an object on the ground. In particular the number per time of objects wrapped by the wrapper can be increased. The wrapper can travel over ground in a continuous movement. Compared with a start-stop operation this continuous movement reduces mechanical stress. The wrapper itself or a vehicle pulling the wrapper needs not to be decelerated or even stopped for the step of depositing the wrapped object on the ground. In this case it would be necessary to accelerate the wrapper later again.

Thanks to the continuous movement an operator who steers the wrapper or a propelled vehicle moving the wrapper has to pay less attention to the step of depositing the wrapped object on the ground. If the wrapper belongs to a baler-wrapper combination, the baler can continue to pick up or otherwise receive crop material from the ground and can process the received material while the wrapper wraps the object (in this application the bale).

According to the invention the object is rotated with respect to the wrapping apparatus frame while resting on the object supporting device. Thereby the object is moved with respect to the or one reservoir holder and thereby with respect to at least one reservoir with wrapping material. This feature enables to wrap the entire surface of the object and not only a surface part. It is possible but thanks to this feature of the invention not necessary to move the or one wrapping material reservoir around the object on the object supporting device. It is also possible that the reservoir is kept stationary. A holder for the reservoir can rigidly be mounted at the wrapping apparatus frame.

Thanks to the wrap placed around the object on the object supporting device nearly no slippage between the object and the object rotating device occurs. This feature enables to measure and control the circumferential velocity of the object on the object supporting device directly or by measuring a value indicative of the velocity of a moving part of the object rotating device or of a sensing element touching the rotated object.

According to the invention the object is also rotated with respect to the wrapping apparatus frame in the end of the process of wrapping the object, i.e. immediately before depositing the object on the ground. The object's rotational velocity is enforced by the object rotating device while the object is on the object supporting device. Thanks to its inertia the rotated and wrapped object tends to keep its rotational velocity after being removed from the object supporting device. A part of the object's surface hits the ground when the wrapped and deposited object reaches the ground. Two movements of the carried and later deposited object are superimposed:

- the rotational movement with respect to the wrapping apparatus frame around the object rotating axis with the rotational velocity enforced by the object rotating device and

- the linear movement in the travelling direction with the travelling velocity caused

- by the wrapping apparatus with the object supporting device carrying the object.

Every one of these movements causes a relative movement of the object's surface with respect to the ground. These relative movements are superimposed. Thanks to the invention it is possible to adapt the rotational velocity of the carried object to the travelling velocity - or the travelling velocity to the rotational velocity - such that the two motions substantially compensate each other at least at the end of the wrapping process. Thereby only a small relative movement of the object's surface with respect to the ground or even no movement at all is achieved in the moment in which the wrapped object is deposited. The risk that the object's wrap is damaged when the object hits the ground is significantly reduced.

Thanks to the reduced risk of damaging the wrap it is sometimes sufficient to place a smaller number of wrapping material layers around the object. This feature saves wrapping material. Less waste is produced when removing the wrap again from the object.

The feature that the object is at least temporarily rotated with a velocity depending on the travelling velocity reduces the risk of damaging the wrap. This feature is in particular of advantage if the wrapped object is removed from the wrapping apparatus by tilting or otherwise pivoting the object supporting device. It is possible but thanks to the invention not necessary to pivot the object supporting device around an angle which depends on the travelling velocity of the wrapping apparatus or on a dimension of the wrapped object. It is possible to remove the object by pivoting the object supporting device with a given pivoting angle or by an alternative determined movement which does not vary from object to object and does not necessarily depend on the travelling velocity. In particular it is not necessary to tilt or otherwise move the object supporting device with the wrapped object around an angle or even over a path which depends on an object dimension or on the current travelling velocity. This feature makes it easier to implement an actuator which pivots the object supporting device. In the case of an actuator with at least one piston-cylinder device the full stroke can be used for pivoting the object supporting device regardless of the object dimension and the travelling velocity. As it is possible to use the full stroke, a shorter piston-cylinder device and/or less hydraulic fluid suffice to deposit the wrapped object.

The effect that no or only a small relative movement between the deposited object and the ground occurs is at least partially accomplished by automatically selecting the rotational velocity to be achieved. It is possible but not necessary to tilt the object supporting device for removing the wrapped object and in particular to make the tilting angle or tilting velocity depending on the travelling velocity. The proper rotational velocity for the carried object can easily be derived from the measured current travelling velocity and - in the case of subsequently wrapping objects with varying sizes - preferably from a dimension of the object perpendicular to the rotating axis. It is more difficult, however, to select the proper tilting angle or velocity or path length as further parameters may have a significant influence, e.g. the inclination of the ground over which the wrapping apparatus is moved or the object's weight or the current hydraulic pressure or fluid temperature in a hydraulic or pneumatic circuit for an actuator which can pivot the object supporting device.

According to the invention the object is also rotated with respect to the wrapping apparatus frame when the wrapped object is removed from the object supporting device. Thereby it is possible but not necessary to interrupt the operation of the object rotating device when removing the wrapped object. A continuous operation of the object rotating device saves mechanical stress compared with a start-stop operation.

According to the invention the velocity with which the object on the object supporting device is rotated is adapted to the travelling velocity of the wrapper. Therefore it is possible but not necessary to amend the wrapper's travelling velocity to the object rotation. In particular it is possible but not necessary to decelerate the wrapper when depositing the object. This feature further enhances a continuous operation and reduces mechanical stress for a propulsion drive which moves the wrapper over ground. If the wrapper is pulled by a propelled vehicle, no signal for varying the travelling velocity needs to be transmitted to a human operator or to a control unit of the propelled vehicle. This feature reduces the requirements to the propelled vehicle and to the data connection.

Often the invention can be implemented on an existing wrapping apparatus without the need of adding or replacing mechanical parts. An object supporting device and an object rotating device are in general already mounted on board of the wrapping apparatus. Often a tachometer is mounted on board of the wrapper itself or of a propelled vehicle which can be connected with the wrapper. Often it suffices to amend the control unit, e.g. by adapting the control software and sometimes additionally the object rotating device such that it can vary the rotating velocity.

PREFERED EMBODIMENTS

In several embodiments the object's rotating velocity which is achieved by the object rotating device does not only depend on the measured travelling velocity value but additionally on at least one further parameter which is measured during operation or is given in advance.

One possible further parameter is used in the same wrapper subsequently wraps several different objects. The further parameter is a dimension of the object to be wrapped in a direction perpendicular to the object rotating axis, i.e. perpendicular to the axis around which the object rotating device rotates the object resting on the object supporting device. In the case of a round-cylindrical object this dimension is the diameter or radius of the object. In the case of a cuboid object this dimension is the maximal distance between an edge and the rotating axis of the object. The used object dimension can be given in advance, i.e. before placing the object on the object supporting device, or can be measured during the operation of the wrapper.

According to the embodiment with the object dimension the achieved circumferential velocity of the object to be wrapped depends on the rotating velocity of a rotating part and on the measured or given object's dimension. This rotating part belongs to the object rotating device and touches the object on the object supporting device. The rotation of the part causes the object to rotate. The rotating part can be a roller directly touching the object or moving a belt which touches the object. The rotating part can rotate together with the object such that no relative movement between the object and the rotating part occurs. The object dimension can further be used for compensating the impact of the travelling velocity and of the diameter of the part which rotates the object to be wrapped. This embodiment is in particular useful if the same wrapping apparatus using the invention subsequently wraps and deposit several objects which may have different dimensions.

It is also possible that the object weight is used in addition to the travelling velocity and in one embodiment to the object dimension. An object with a high weight will have a high inertia and therefore the velocity of the object rotation decreases less due to friction compared with a light-weight object.

In one embodiment a value indicative of an inclination of the wrapping apparatus is measured. The inclination is an angle about which the wrapping apparatus is currently tilted with respect to a horizontal plane (a plane perpendicular to an axis pointing to the center of the earth). Measuring the inclination is in particular useful when the wrapping apparatus is operated in a hilly environment. The rotating velocity which is kept or achieved in the end of wrapping the object depends on the travelling velocity value and in addition on the measured inclination value. The measured inclination can be the pivoting angle of the wrapping apparatus around a horizontal axis perpendicular to the travelling direction or parallel to the travelling direction, e.g. In one embodiment a value indicative of the current inclination in a plane perpendicular to the rotating axis of the rotated object is measured.

In one embodiment the object rotating device rotates the object with a constant rotating velocity during the entire process of wrapping the object. This continuous movement of the object rotating device saves an acceleration step or a deceleration step. The risk is reduced that the inertia of the rotated object causes an undesired feedback onto the object rotating device when changing the rotational velocity. The constant rotating velocity depends on the measured travelling velocity, e.g. the travelling velocity in the beginning of wrapping the object, and in one embodiment on the object's dimension and/or on the wrapping apparatus inclination. The next object may be rotated with a different constant velocity depending on the travelling velocity measured at a later time point.

In an alternative embodiment the rotating velocity is or can be changed during the process of wrapping the same object. Therefore the wrapping process is divided into at least two subsequent phases. In a first phase the object is rotated with a given rotating velocity which does not necessarily depend on the travelling velocity or on further operating parameters which can vary during operation. Or the rotating velocity is set in the beginning of the first phase depending on the current traveling velocity and remains constant regardless of travelling velocity changes in the first phase. In particular the rotating velocity in the first phase does not necessarily depend on an object dimension or weight (if the wrapper subsequently wraps several objects) or object position on the object supporting device or an inclination of the wrapping apparatus. This given rotating velocity can be adapted to given design or operating constraints, e.g. to the available torque or the number of available wrapping material reservoirs or to a property of the wrapping material or to an object dimension.

In a subsequent second phase the object is rotated with a rotating velocity depending on the measured travelling velocity value. The second phase is performed in the end of the wrapping procedure and is preferably triggered by the event that the required number of wrapping material layers is completely or at least nearly completely placed around the object. At the end of the second phase the rotated and fully wrapped object is rotated with the rotating velocity which is selected depending on the current travelling velocity and is removed from the object supporting device. Of course it may happen that the rotating velocity of the second phase which depends on the travelling velocity coincides with the given velocity of the first phase such that the velocity needs not to be changed.

In one implementation the second phase is triggered by the event that the length of the web already placed on the object's surface reaches a given threshold. Preferably this threshold depends on a dimension of the object perpendicular to the object rotating axis.

In one embodiment a closed-loop control is performed for controlling the rotation of the object on the object supporting device with respect to the wrapping apparatus frame. The closed-loop control is performed during the entire wrapping process or at least at the end of the wrapping procedure. The control gain for this closed-loop control is the selected and thereby required rotating velocity, preferably the circumferential velocity, of the object to be wrapped. This required rotating velocity is automatically selected depending on the measured travelling velocity. A rotation sensor measures the actual rotating velocity of the object on the object supporting device. In one implementation a counter roller is biased against the circumferential surface of the object and is rotated by the object. The number of rotations of the counter roller is counted and serves as a value indicative of the circumferential velocity. In a further implementation the rotation sensor measures the rotational velocity of a rotated part which carries or otherwise touches the object to be wrapped and is rotated together with the object without a significant slippage between the object surface and the rotated part surface. The rotated part can be a roller or belt of the object supporting device or a roller or wheel or shaft of the object rotating device, e.g.

According to the embodiment with the closed-loop control a control unit generates control inputs for the object rotating device such that the control error, i.e. the deviation between the required and the actual rotational velocity of the carried object, is reduced. This embodiment is in particular of advantage if the weight of the object to be wrapped may vary from object to object and is not known but may influence the achieved actual rotating velocity. The embodiment with the rotation sensor therefore saves the need of a scale for the object. It also saves a load or torque sensor for the object rotating device. Nevertheless a required rotational velocity is achieved.

In one embodiment the object supporting device and therefore the carried object to be wrapped is moved over ground with the travelling velocity. In a further embodiment the object supporting device is moved with respect to the frame or a chassis of the wrapping apparatus in the or opposite to the travelling direction. This relative movement of the object supporting device is preferably also measured and considered together with the travelling velocity of the frame or chassis when calculating the rotational velocity for the object.

In one embodiment the object supporting device can be pivoted with respect to the wrapping apparatus frame around an axis parallel to the object rotating axis. Preferably this pivoting axis is horizontal and perpendicular to the travelling direction. For removing the wrapped object from the object supporting device, the object supporting device carrying the wrapped object is pivoted upwards around this axis. Thanks to the force of gravity the wrapped and still rotated object glides or rolls downwards from the pivoted object supporting device towards the ground. Preferably the object rotating device keeps or achieves the object rotation with the rotating velocity which is automatically selected depending on the travelling velocity wherein the object rotating device keeps or achieves it also after the object supporting device is pivoted upwards.

In one embodiment the object supporting device is rotatable with respect to the wrapping apparatus frame. Preferably the rotating axis of this rotation is vertical. An actuator rotates the object supporting device carrying the object to be rotated with respect to the wrapping apparatus frame. In addition the object rotating device rotates the object with respect to the object supporting device with the selected velocity. This embodiment is one way to wrap the entire surface of the object without the need of moving a wrapping material reservoir around the object on the object supporting device.

In one implementation the rotation of the object supporting device with respect to the wrapping apparatus frame is stopped when the object is completely wrapped. In a further implementation the rotation of the object supporting device is performed such that the object rotating axis is perpendicular to the travelling direction when the object is entirely wrapped and is to be deposited.

In one embodiment the object supporting device comprises at least one part which touches the object to be wrapped and which can be rotated or otherwise moved. This part can comprise at least one roller or wheel or conveyor belt. The object rests on the or every touching moveable part. The object rotating device rotates the or at least one touching part. When being moved, this part rotates the object.

In one implementation the object supporting device comprises a frame and at least two rollers. The object supporting device frame is carried by the wrapping apparatus frame. The object supporting device rollers are rotatably mounted at the frame and which serve as an assembly of touching parts. The object supporting device frame can have the shape of a cradle. The frame of the object supporting device can be pivotal or rotatable with respect to the wrapping apparatus frame. The object rotating device is preferably integrated into the frame and rotates the rollers and thereby the object while the web is taken from the or one reservoir. In the embodiment with several rollers mounted at the object supporting device frame at least one roller is driven by the object rotating device.

In one implementation the object to be wrapped directly rests on the rollers and is rotated by the or by at least one driven roller. In one variation at least one conveying belt is guided around the rollers mounted at the object supporting device frame. Preferably several parallel belts are guided around the rollers. The or at least one driven roller moves the or every conveyor belt. The object rests on the or at least one moved conveyor belt and is rotated by the or by at least one moved conveyor belt. This embodiment avoids direct contact between the object surface and a driven roller. It is possible to move a belt and thereby rotate the carried object by using a sprocket wheel which touches a roller around which the belt is guided.

In yet a further alteration the object rests on idler rollers mounted at the object supporting device frame. The object is rotated by a further rotating member which is positioned with a distance to the idler rollers supporting the object, e.g. is outside of the frame, and which is driven. The further rotating member, e.g. at least one roller or bar, touches the circumferential surface of the object or is injected into the object. Preferably the object rests only on the idler rollers but not on the rotating member.

In yet a further embodiment a rotated part of the wrapping apparatus holds the object. The part is rotated with respect to the wrapping apparatus frame and rotates the object such that no relative movement between the object and the rotated part occurs. In the case of a round-cylindrical or cuboid object to be wrapped the rotated part preferably touches both front faces of the object.

In one embodiment a chamber can contain the object to be wrapped. Therefore the object can consist of several loose parts or particles which are not yet connected with each other. Preferably the object is formed under pressure in the chamber from the loose parts or particles. The circumferential or entire surface of the object is wrapped together in the chamber such that the object does not fall apart after being moved out of the chamber. The object supporting device can carry the object in the chamber. The object rotating device can rotate the object in the chamber. The wrapped object is ejected out of the chamber with a selected rotational velocity depending on the travelling velocity.

In a further embodiment the object to be wrapped is not surrounded by walls of a chamber while being supported according to the invention.

According to the invention the object on the object supporting device is rotated with a rotating velocity which is selected depending on the measured travelling velocity value. Preferably a tachometer is moved together with the wrapper and measures this value. A control unit receives signals from the tachometer and generates control inputs for the object rotating device.

In one embodiment this tachometer is mounted on board of the wrapping apparatus itself and yields the travelling velocity value. This embodiment does not require a data connection with a tachometer outside of the wrapping apparatus. A control unit on board of the wrapping apparatus processes signals from this tachometer and generates control inputs for the object rotating device depending on the received tachometer signals and optionally on further parameters, e.g. on an object dimension or weight.

In a further embodiment the wrapping apparatus is mechanically connected with a further vehicle, e.g. with a propelled tractor or a field chopper or a combine harvester pulling or pushing the wrapping apparatus. Alternatively the further vehicle can be an object forming vehicle, e.g. a bale press mounted on board of a pulled or self-propelled vehicle. The wrapping apparatus and the further vehicle moves over ground with the same travelling velocity. The tachometer is mounted on board of this further vehicle and is in data connection with the control unit controlling the object rotating device. The control unit which generates control inputs for the object rotating device can be mounted on board of the wrapping apparatus or on board of the further vehicle.

One advantage of this further embodiment is: Often a tachometer is already mounted on board of the further vehicle, in particular in the case of a propelled further vehicle. A data connection is often already established, e.g. according to the ISOBUS standard (ISO 11783). It is not necessary to provide a further tachometer on board of the wrapping apparatus. The invention can be implemented on an existing wrapping apparatus by adapting control software and perhaps by adapting the object rotating device. It is also possible that the control unit is mounted on board of the object forming vehicle, e.g. the round baler. The tachometer is mounted on board of the propelled vehicle which pulls the object forming vehicle and thereby also the wrapping apparatus.

In one implementation the tachometer measures the rotational velocity of an axle which carries at least one ground-engaging wheel. This axle is rotated when the wrapping apparatus is moved over ground. The axle can belong to the wrapping apparatus or to an object forming apparatus connected with the wrapping apparatus or to a propelled vehicle which pulls or pushes the wrapping apparatus.

In a further implementation the current geo-position of the wrapping apparatus is measured several times while the wrapping apparatus moves over ground, e.g. with a given sample rate. The quotient between the distance between two subsequent measured geo-positions and the time span between two subsequent measuring time points yields an approximation for the travelling velocity of the wrapping apparatus over ground. The implementation with the geo-position sensor saves the need of a tachometer contacting a rotated axle.

These implementations with the tachometer for the axle and the geo-position sensor can also be combined. This combination provides redundancy.

In one embodiment the wrapped object rolls or glides directly from the object supporting device onto the ground. In a further embodiment the wrapped object rolls or glides from the object supporting device onto a guiding member, e.g. a ramp, and subsequently from the guiding member onto the ground. The guiding member is mechanically connected with the frame of the wrapping apparatus and can extend in one plane or can be curved or arcuate. In one implementation a biasing element, e.g. a spring, tends to pivot the guiding member upward. The wrapped object pivots the guiding member downwards against the force of the biasing element when the object moves over the guiding member. The guiding member can decelerate the object and/or can change the direction in which the wrapped and removed object moves towards the ground, e.g. by decreasing the angle between the movement's direction and the ground.

Preferably an estimated friction between the object's surface and the upper surface of the guiding member is considered. The rotating velocity for rotating the object at the end of wrapping the object is selected depending on the measured travelling velocity and such that the estimated friction is compensated. This friction decelerates the object's rotational velocity on the guiding member. The rotational velocity of the object is calculated or given such that the effect of the friction is substantially compensated.

The wrapping apparatus can be a stand-alone wrapper. In one embodiment the stand-alone wrapper comprises at least two ground-engaging wheels which are mounted at the wrapping apparatus frame and a loading station, e.g. a fork or a gripper, which lifts the object from the ground or from a further device, e.g. a container or conveyor, and places the lifted object on the object supporting device.

In an alternative embodiment of the stand-alone wrapper a device not belonging to the stand-alone wrapper places the object to be wrapped on the object supporting device. In one application this device is a lifting implement, e.g. a front end loader or gripper, mounted at a tractor.

In a further application the wrapping apparatus can be a part of a combination which additionally comprises an object forming device, e.g. a bale press forming under pressure a bale from loose material. In one embodiment the combination comprises a frame which carries the object forming device and the wrapping apparatus wherein several ground-engaging wheels are mounted at the frame. The wrapping apparatus frame belongs to this frame of the combination. In the case of a bale press this combination is often called a baler-wrapper combination. Preferably the object is formed in a chamber of the object forming device, preferably from injected loose material and under pressure. An object transfer unit transfers the formed object from the chamber onto the object supporting device. Or the object drops and/or glides from the chamber onto the object supporting device. It is possible that the distance between the chamber and the object supporting device can be changed. For moving the object onto the object supporting device the object supporting device is moved towards the chamber. Later the object supporting device carrying the object is moved away from the chamber. The transferred object is wrapped on the object supporting device. This embodiment saves the need of depositing the object on the ground and later picking up the object again for the purpose of wrapping the object on the object supporting device.

These and other aspects of the invention and of the preferred embodiment will be even more apparent from the detailed embodiment as described below and will be elucidated in detail there.

BRIEF DESCRIPTION OF THE DRAWINGS

- Fig. 1 shows the baler-wrapper combination with an embodiment of the invention from the left side while a bale is carried by the bale supporting device and is rotated;
- Fig. 2 shows the baler-wrapper combination of Fig. 1 while the wrapped bale rolls from the pivoting bale supporting device on the ground;
- Fig. 3 shows the pivoted bale supporting device and the wrapped bale deposited on the ground in a viewing direction angular to the travelling direction.

DETAILED DESCRIPTION OF EMBODIMENT

In the embodiment the invention is used on board of a baler-wrapper combination comprising

- a round baler 1 with a sequence of pressing rollers 6 partly mounted at a pivotal tailgate 11 and partly mounted at a stationary front housing (not shown) and
- a wrapper 3 serving as the wrapping apparatus according to the invention.

Only the rear part of the baler 1 with the pivotal tailgate 11 is shown in Fig. 1 and Fig. 2. The baler-wrapper combination 1, 3 is moved over ground G in the travelling direction TD (in Fig. 1 and Fig. 2 from right to left). In the embodiment a tractor or propelled harvester (not shown) pulls or pushes the baler-wrapper combination 1, 3.

The baler-wrapper combination 1, 3 rests on the ground by means of at least two ground-engaging wheels 4. These two ground-engaging wheels 4 carry the baler frame 5. A frame of the wrapper 3 is mounted at a frame 5 of the baler 1. This wrapper frame comprises two longitudinal bars 2.1 (left bar) and 2.r (right bar) and a transversal bar 40 connecting the longitudinal bars 2.1, 2.r (only shown in Fig. 3). In the embodiment the wrapper 3 does not comprise own ground-engaging wheels but is carried by the baler 1 by means of the bars 2.1, 2.r.

In the embodiment the baler 1 forms a round-cylindrical bale B by means of a sequence of driven pressing rollers 6. These pressing rollers 6 surround a drum-shaped pressing chamber Ch with fixed size. The invention can also be used for a baler with a variable chamber, e.g. a chamber which is surrounded by at least one pressing belt or by pivotal pressing rollers, or on board of a stand-alone wrapper with ground-engaging wheels and in one embodiment a lifting device.

Besides the wrapper frame 2.1, 2.r, 40 the wrapper 3 of the embodiment comprises the following further parts:

- two driven bale supporting rollers 10.f (front roller) and 10.r (rear roller),
- in one implementation a sequence with several driven or idler intermediate bale supporting rollers 10.i positioned between the driven rollers 10.f, 10.r (only shown in Fig. 3),
- a pivotal bale supporting frame with a left frame part 13.1 and a right frame part 13.r and forming a cradle,
- two left lateral rotatable bobbins 61.3, 61.4 and two lateral right rotatable bobbins 61.1, 61.2 (only shown in Fig. 3) which are rotatably mounted at the bale supporting frame 13.1, 13.r,
- the horizontal pivoting axle 12 around which the bale supporting frame 13.1, 13.r can be pivoted with respect to the wrapper frame 2.1, 2.r, 40,
- a hydraulic frame actuator 59,
- a bale transfer unit 55 with a curved pivotal bale transfer sheet 46 and a hydraulic transfer actuator 60,
- the horizontal pivoting axle 49 around which the bale transfer sheet 46 can be pivoted with respect to the bale supporting frame 13.1, 13.r and with respect to the wrapper frame 2.1, 2.r, 40,
- a left and a right web clamping and severing device 20.1, 20.r (only shown in Fig. 3),
- a reservoir holder 21 for a supply reel 22 with wrapping material (only shown in Fig. 1 and Fig. 2) and a further reservoir holder or a further supply reel (not shown), and
- a rotation sensor 41 which measures the actual circumferential velocity v_B of the bale B with respect to the bale supporting frame 13.1, 13.r.

The hydraulic transfer actuator 60 can pivot the bale transfer sheet 46 with respect to the bale supporting frame 13.1, 13.r around the horizontal axle 49 upwards and downwards.

The bale supporting rollers 10.f, 10.r, 10.i and the bale supporting frame parts 13.1, 13.r belong to a pivotal bale supporting device 15 pivotally mounted on the wrapper frame 2.1, 2.r and serving as the object supporting device. Such a bale supporting device 15 is often called a wrapping table for a bale to be wrapped. The bale supporting rollers 10.f, 10.r and one embodiment the intermediate bale supporting rollers 10.i are rotatably mounted between and carried by the frame parts 13.1 and 13.r. The rotatable bobbins 61.1, ..., 61.4 limit the lateral movement of the bale B in a direction perpendicular to the travelling direction TD and enable the bale B to rotate around its center axis CA even when a front face of the bale B touches a bobbin 61.1, ... 61.4. The hydraulic frame actuator 59 can pivot the bale supporting frame 13.1, 13.r with respect to the wrapper frame 2.1, 2.r, 40 around the axle 12 upwards and downwards.

In the embodiment the driven bale supporting rollers 10.f, 10.r are rotated with a joint rotating frequency $\omega$_R. This rotating frequency w_R can vary over time or can be kept constant. The bale supporting rollers 10.1, 10.r are always rotated in the same direction (in Fig. 1 and Fig. 2 in the direction of the arrow 47, i.e. clockwise).

The control unit (not shown) mounted on board of the wrapper 3 or on board of the baler 1 generates control inputs for a motor (not shown) rotating the rollers 10.f, 10.r. The driven bale supporting rollers 10.f, 10.r and this motor belong to the object rotating device of the embodiment. This motor can rotate a shaft which is driven with constant frequency. The shaft drives a variator or transmission unit which achieves a controlled transmission ratio for rotating the bale supporting roller 10.f. 10.r with the desired rotational frequency. Or the motor rotates the shaft with a varying velocity. It is also possible that a controlled electric motor in the interior of a roller 10.f, 10.r rotates the roller 10.f. 10.r such that a shaft outside of the rollers 10.f, 10.r is saved. The driven rollers 10.f, 10.r and the motor (not shown) for driving the rollers 10.f, 10.r belong to the object rotating device of the embodiment.

The baler-wrapper combination 1, 3 operates as follows:

- The baler-wrapper combination 1, 3 picks up or otherwise receives loose crop material from the ground.
- Received loose crop material is conveyed in a direction opposite to the travelling direction TD and towards the pressing chamber Ch which is surrounded by the pressing rollers 6. The conveyed crop material is injected into the pressing chamber Ch.
- The round baler 1 forms under pressure from injected loose crop material a round-cylindrical bale B in the pressing chamber Ch by means of the surrounding pressing rollers 6 and/or surrounding pressing belts (not shown).
- The circumferential surface C_B of the bale B is wrapped into a net while the bale B is in the pressing chamber Ch and the tailgate 11 is still closed.
- The tailgate 11 is opened.
- The bale B with the wrapped circumferential surface C_B rolls onto the bale transfer sheet 46 while the sheet 46 is in an approximately horizontal position.
- The transfer actuator 60 pivots the bale transfer sheet 46 with the bale B backwards and upwards around the axis 49 into the position shown in Fig. 1.
- The bale B rolls from the bale transfer sheet 46 onto the bale supporting rollers 10.1, 10.r, 10.i or onto the bale supporting belts belonging to the bale supporting device 15.
- The bale supporting rollers 10.1, 10.t rotate the bale B with respect to the bale supporting device 15 and therefore with respect to the wrapper frame 2.1, 2.r, 40. The bale supporting rollers 10.1, 10.r have the joint diameter d_R and are rotated with the same frequency $\omega$_R in the direction of the arrow 47. The bale B resting on the rollers 10.1, 10.r, 10.i is thereby rotated with a frequency $\omega$_B around its center axis CA (perpendicular to the drawing planes of Fig. 1 and Fig. 2) in a direction such that the lower part of the bale's surface C_B moves backwards, i.e. opposite to the travelling direction TD (in Fig. 1 and Fig. 2 anti-clockwise, cf. the arrow 39). No or only limited slippage between the rollers 10.f, 10.r, 10.i and the bale's surface C_B occurs.
- In one embodiment the bale supporting frame 13.1, 13.r keeps its position with respect to the wrapper frame 2.1, 2.r, 40 while the carried bale B is wrapped. In a further embodiment the entire bale supporting device 15 carrying the rotated bale B is rotated with respect to the wrapper frame 2.1, 2.r, 40 around a vertical axis (not shown).
- In one implementation the rollers 10.f. 10.r, 10.i touch the circumferential surface C_B of the bale B. In an alternative implementation at least one conveying belt (not shown) is guided around the rollers 10.f and 10.r and optionally 10.i and is moved by the driven rollers 10.f. 10.r. The or at least one conveying belt rotates the bale B with low slippage.
- At least one web 23 of wrapping material is pulled from the or one supply reel 22 kept by the reservoir holder 21. In one embodiment only the bale B is rotated and the or every reservoir holder 21 is stationary. In a further embodiment the or every reservoir holder 21 is moved around a vertical rotating axis and thereby moved around the rotated bale B on the rollers 10.f. 10.r, 10.i. In one implementation the or every reservoir holder 21 is mounted at the lower end of a rotated wrapping arm (not shown). In a further implementation the or every reel holder 21 is mounted on a rotated wrapping ring (not shown). In every implementation the web 23 is pulled from the supply reel 22 by the rotation of the bale B and optionally by the movement of the reservoir holder 21 around the rotated bale B.
- After the required number of layers is placed around the bale B on the rollers 10.f, 10.r., 10.i, the web clamping and severing arms 20.1, 20.r clamp and sever the or every web 23, cf. Fig. 3.
- The actuator 59 pivots the bale supporting device 15 carrying the wrapped bale B with respect to the wrapper frame 2.1, 2.r, 40 around the horizontal axis 12 away from the chamber Ch, cf. Fig. 2.
- The wrapped bale B rolls from the pivoted bale supporting device 15 backwards onto the ground G.

In the embodiment with the fixed-size pressing chamber Ch surrounded by several pressing rollers 6 the required diameter d_B of the bale B is given by the construction of the baler 1 and is the same for every bale. Preferably the pressure applied by the crop material in the chamber Ch onto the tailgate 11 is measured and serves as a value indicative of the current actual bale diameter. In the embodiment with a variable chamber the required diameter of the bale B in the pressing chamber Ch is given by the operator. The actual diameter d_B is measured, e.g. by measuring the pivoting angle of a tensioning device tensioning the or every pressing belt.

In both cases the bale is formed in the bale forming chamber Ch such the actual bale diameter is substantially equal to the required diameter. Therefore the actual diameter d_B of the bale B on the bale supporting device 15 is known after the bale B is ejected out of the pressing chamber Ch.

The baler-wrapper combination with the baler 1 and the wrapper 3 is pulled by a tractor or further propelled vehicle (not shown) over ground in the travelling direction TD with a current travelling velocity v. The actual travelling velocity v may vary over time and is measured. In one embodiment a tachometer 32 on board of the baler-wrapper combination 1, 3 measures the number of revolutions of the ground-engaging wheels 4. This tachometer 32 measures the number of rotations of the axle carrying the wheels 4. Or the tachometer 32 measures a further value indicative of the travelling velocity v. In a further embodiment a tachometer mounted on board of the propelled vehicle pulling the baler-wrapper combination 1, 3 delivers a value indicative of the travelling velocity v. It is also possible that a geo-position sensor (not shown) measures several times the respective current geo-position of the combination 1, 3. The geo-positions and the time spans between subsequent measurements yield the travelling velocity v.

As can be seen in Fig. 1 and Fig. 2 the bale B on the bale supporting device 15 is rotated in the direction of the arrow 39 such that the lower part of the bale's surface $C\_B$ moves backward, i.e. opposite to the travelling direction TD. The circumferential velocity $v\_B$ of the bale's surface $C\_B$ is $v\_B = \Pi * d\_B * \omega\_B$ wherein $\omega\_B$ is the rotating frequency with which the bale B on the bale supporting device 15 is rotated and $d\_B$ is the bale's diameter. According to the invention the rotating frequency $\omega\_B$ can automatically be varied during operation depending on the measured current travelling velocity v. In addition the bale supporting device 15 and therefore the rotated bale B on the bale supporting device 15 is linearly moved forward with the travelling velocity v.

In the embodiment it is desired that substantially no relative movement between the rotated and wrapped bale B and the ground G occurs in that moment in which the wrapped and deposited bale B hits the ground G. It is further desired that the travelling velocity v is not amended for the sake of wrapping and depositing the bale B. The diameters $d\_B$ of the bale B and $d\_R$ of the rollers 10.l, 10.r are known and remain constant while the bale B on the bale supporting device 15 is wrapped and deposited. Therefore the controllable variable $\omega\_B$ (rotating frequency of the bale B) is determined such that the equation

$v\_B = \Pi * d\_B * \omega\_B$ equals v holds at least at the end of the wrapping procedure.

The rollers 10.f and 10.r are rotated with a frequency $\omega\_R$ and have a common diameter $d\_R$. In the case of a belt guided around the rollers 10.f, 10.r the constant and known thickness $t\_b$ of this belt is added to the roller diameter $d\_R$. The rotating frequency $\omega\_R$ of the rollers 10.f, 10.r is variable and can be adapted. The circumferential surfaces of the rollers 10.f, 10.r - or the outer surface of at least one belt guided around the rollers 10.f, 10.r. - touch the bale's circumferential surface $C\_B$.

In one implementation an open-loop control is performed. Provided that no slippage between the roller or belt surface and the bale surface $C\_B$ occurs the equation

$$d\_B * \omega\_B = d\_R * \omega\_R$$

holds. In the case of belts guided around the rollers 10.f, 10.r the equation

$$d\_B * \omega\_B = (d\_R + t\_b) * \omega\_R$$

holds.

In order to take slippage into account the relationship may be described by

$$d\_B * \omega\_B = d\_R * \omega\_R * \alpha$$

wherein $\alpha$ being smaller than 1 is a predetermined correction factor which may depend on $\omega\_R$. The equations

$$\Pi * d\_B * \omega\_B = v \text{ and } d\_B * \omega\_B = d\_R * \omega\_R * \alpha \text{ or}$$

$$\Pi * d\_B * \omega\_B = v \text{ and } d\_B * \omega\_B = (d\_R + t\_b) * \omega\_R * \alpha$$

enable deriving a required rotating frequency $\omega\_R$ for the rollers 10.f, 10.r depending on the travelling velocity v. In the embodiment the rotating frequency $\omega\_R$ of the rollers 10.f, 10.r is derived depending on the travelling velocity v and in advance or during operation while wrapping the bale B. The control unit receives a value indicative of the travelling velocity v and generates control inputs such that the bale supporting rollers 10.f, 10.r are rotated with the calculated required frequency $\omega\_R$.

In an alternative implementation a closed-loop control with the required bale's circumferential velocity $v\_B = \Pi$

12

* d_B * ω_B as the gain value is performed. The gain value v_B is determined such that v_B equals v holds. The sensor 41 measures the actual circumferential velocity v_B of the rotated bale B. In one embodiment a counter roller is biased against the bale's circumferential surface C_B such that substantially no slippage between the bale surface C_B and the counter roller 41 occurs. A counter measures the number of revolutions of the counter roller.

The rotational frequency ω_R of the rollers 10.f, 10.r is varied such that the control error (difference between required and actual circumferential velocity v_B of the bale B) vanishes or is at least kept small. This implementation often yields a smaller difference between the measured actual bale's circumferential velocity v_B and the travelling velocity v as the effect of slippage between the bale rotating device 10.f, 10.r and the bale B is automatically compensated without the need of estimating the slippage. In addition the effect of the bale weight is compensated. This weight may differ from bale to bale.

Reference signs used in the claims will not limit the scope of the claimed invention. The term "comprises" does not exclude other elements or steps. The articles "a", "an", and "one" do not exclude a plurality of elements.

## LIST OF REFERENCE SIGNS

| | |
|---|---|
| 1 | round baler with the drum-shaped pressing chamber Ch surrounded by the pressing rollers 6, forms under pressure the bale B to be wrapped |
| 2.l, 2.r | left and right longitudinal bars of the wrapper frame, connected by the traversal bar 40, carrying the bale supporting device 15, belong to the wrapper frame |
| 3 | wrapper with the bale supporting device 15 and the wrapper frame 2.l, 2.r, 40 |
| 4 | ground-engaging wheels of the baler 1; their common rotational velocity is measured by the tachometer 32 |
| 6 | sequence of driven pressing rollers of the baler 1, surround the bale forming chamber Ch |
| 10.f, 10.r | driven front and rear bale supporting rollers, rotatably mounted at the bale supporting frame 13.l, 13.r, serve as the object rotating device |
| 10.i | intermediate bale supporting rollers, are idler rollers |
| 11 | pivotal tailgate of the baler 1, carries some pressing rollers 6 |
| 12 | pivoting axle of the bale supporting frame 13.1, 13.r with respect to the wrapper frame 2.1, 2.r, 40 |
| 13.l, 13.r | left and right frame parts of the bale supporting frame, belong to the bale supporting device 15 |
| 15 | pivotal bale supporting device (wrapping table) with the supporting frame parts 13.l, 13.r and the bale supporting rollers 10.f. 10.r, 10.i, serves as the object supporting device |
| 20.l, 20.r | left and right web clamping and severing devices |
| 21 | reservoir holder for a web supply reel 22 |
| 22 | supply reel with a web of wrapping material, rotatably kept by the reservoir holder 21 |
| 23 | web of wrapping material, pulled from the supply reel 22, to be placed on the bale surface |
| 32 | tachometer, measures the rotational velocity of the axle carrying the ground-engaging wheels 4 |
| 39 | direction in which the bale B on the bale supporting device 15 is rotated with the circumferential velocity v_B |
| 40 | traversal bar of the wrapper frame, connected with the bars 2.l, 2.r, belong to the wrapper frame |
| 41 | sensor (counter roller) for measuring the actual circumferential velocity v_B of the rotated bale B |
| 46 | bale transfer sheet of the bale transfer unit 55, pivotal around the axle 49, can be pivoted by the actuator 60 |
| 47 | direction in which the bale supporting rollers 10.f, 10.r are rotated with respect to the bale supporting frame 13.l, 13.r |
| 49 | pivoting axle of the bale transfer sheet 46 |
| 55 | bale transfer unit with the pivotal bale transfer sheet 46 |
| 59 | hydraulic frame actuator for pivoting the bale supporting frame 13.l, 13.r with respect to the wrapper frame 2.l, 2.r, 40 around the axle 12 |

(continued)

| 60 | hydraulic transfer actuator for pivoting the bale transfer sheet 46 with respect to the bale supporting frame 13.l, 13.r around the axle 49 |
|---|---|
| 61.1, 61.2,... | bobbins which are rotatably mounted at the bale supporting frame 13.l, 13.r |
| B | round-cylindrical bale, serves as the object to be wrapped, formed in the chamber Ch |
| CA | center axis of the bale B around which the bale B is rotated by the rollers 10.f, 10.r |
| Ch | drum-shaped pressing chamber, surrounded by the pressing rollers 6 |
| C_B | circumferential surface of the bale B, rests on the bale supporting roller 10.f, 10.i, 10.r |
| d_B | diameter of the round-cylindrical bale B |
| d_R | joint diameter of the driven rollers 10.f, 10.r |
| G | ground on which the wrapped bale B is deposited |
| $\omega_B$ | frequency with which the bale B is rotated in the direction 39 with respect to the bale supporting device 15 |
| $\omega_R$ | joint frequency with which the rollers 10.f, 10.r are rotated in the direction 47 |
| TD | travelling direction of the wrapper 3 |
| t_b | thickness of the belts guided around the rollers 10.f, 10.r |
| v | travelling velocity of the wrapper 3 |
| v_B | circumferential velocity of the rotated bale B with respect to the bale supporting device 15, measured by the sensor 41 |

**Claims**

1. Wrapping apparatus (3) comprising

   - an object supporting device (15),
   - a wrapping apparatus frame (2.1, 2.r, 40) carrying the object supporting device (15),
   - an object rotating device (10.f, 10.r), and
   - at least one reservoir holder (21) for holding a reservoir (22) of wrapping material,

   wherein the wrapping apparatus (3) is arranged to be moved over ground (G) in a travelling direction (TD),
   wherein the object supporting device (15) is arranged to carry an object (B) to be wrapped,
   wherein the object rotating device (10.f, 10.r) is arranged to rotate the object (B) carried on the object supporting device (15) with respect to the wrapping apparatus frame (2.1, 2.r, 40) around an object rotating axis (CA) being perpendicular to the travelling direction (TD),
   wherein the wrapping apparatus (3) is arranged

   - to carry the rotated object (B) on the object supporting device (15),
   - to wrap the rotated object (B) on the object supporting device (15) into at least one web (23) of wrapping material taken from the or at least one reservoir (22) held by the or one reservoir holder (21),
   - to remove the wrapped object (B) from the object supporting device (15) and
   - to deposit it onto the ground (G),

   **characterized in that**
   the object rotating device (10.f, 10.r) is arranged to rotate the object (B) on the object supporting device (15) with respect to the wrapping apparatus frame (2.1, 2.r, 40) with a velocity (v_B) selected out of different possible rotational velocities and
   the wrapping apparatus (3) is arranged to automatically select a rotational velocity (v_B) and to achieve the selected rotational velocity (v_B) for the rotation of the object (B) with respect to the wrapping apparatus frame (2.1, 2.r, 40) performed by the object rotating device (10.f, 10.r)

- at least in the end of wrapping the object (B) on the object supporting device (15) and
- before the object (B) is removed from the object supporting device (15),

wherein the wrapping apparatus (3) is arranged to select the rotational velocity (v_B) depending on a measured value indicative of the current travelling velocity (v) over ground (G) of the moved wrapping apparatus (3).

2. Wrapping apparatus according to claim 1,
   **characterized in that**
   the wrapping apparatus (3) is arranged to automatically select the rotational velocity (v_B) for the rotation of the object (B) depending

   - on the measured current travelling velocity (v) and
   - in addition on a dimension (d_B) of the rotated object (B) in a direction
   - perpendicular to the object rotating axis (CA).

3. Wrapping apparatus according to one of the preceding claims,
   **characterized in that**
   the object rotating device (10.f, 10.r) comprises

   - at least one rotatable element (10.f, 10.r) arranged for touching the object (B) on the object supporting device (15) and
   - a motor for rotating the or one rotatable element (10.f, 10.r),

   wherein the motor is arranged to rotate the rotatable element (10.f, 10.r) at least in the end of wrapping the object (B) on the object supporting device (15) with a selected rotational velocity ($\omega$_R) and
   wherein the rotating frequency ($\omega$_R) of the rotated rotatable element (10.f, 10.r) which is selected and kept or achieved in the end of wrapping the object (B) depends on the measured current travelling velocity value (v).

4. Wrapping apparatus according to claim 3,
   **characterized in that**
   the rotating frequency ($\omega$_R) of the rotated rotatable element (10.f, 10.r) which is selected and kept or achieved in the end of wrapping the object (B) additionally depends on a dimension (d_B) of the rotated object (B) in a direction perpendicular to the object rotating axis (CA).

5. Wrapping apparatus according to one of the preceding claims,
   **characterized in that**
   the wrapping apparatus (3) comprises a rotation sensor (41) which is arranged to measure a value indicative of the actual rotating velocity (v_B) of the rotated object (B) carried by the object supporting device (15) with respect to the wrapping apparatus frame (2.1, 2.r, 40),
   wherein the object rotating device (10.f, 10.r) is arranged to perform the rotation of the object (B) depending on

   - the measured current travelling velocity (v) and
   - on received signals indicative of the measured actual rotating velocity (v_B) of the object (B).

6. Wrapping apparatus according to one of the preceding claims,
   **characterized in that**
   the object rotating device (10.f, 10.r) is arranged to rotate the object (B) at least in the end of wrapping the object (B) with a selected rotating velocity (v_B) such that at least **in that** moment in which the deposited object (B) touches the ground (G)
   substantially no relative movement between

   - the object (B) and
   - the ground (G) over which the wrapping apparatus (3) is moved occurs.

7. Wrapping apparatus according to one of the preceding claims,
   **characterized in that**
   the object rotating device (10.f, 10.r) is arranged to rotate the object (B) carried by the object supporting device (15) with respect to the wrapping apparatus frame (2.1, 2.r, 40) selectively

- with a given rotating velocity or
- with the rotating velocity (v_B) being selected depending on the measured travelling velocity value (v).

8. Wrapping apparatus according to one of the preceding claims,
   **characterized in that**
   the object rotating device (10.f, 10.r) is arranged to rotate the object (B) with a rotating velocity (v_B) which depends at least in the end of wrapping the object (B)

   - on the measured current travelling velocity value (v) and addition
   - on a value indicative of an inclination of the wrapping apparatus (3).

9. Wrapping apparatus according to one of the preceding claims,
   **characterized in that**
   a tachometer (32)

   - is mounted on board of the wrapping apparatus (3) and
   - is arranged to measure a value (v) indicative of the current travelling velocity of the wrapping apparatus (3) over ground (G),

   wherein the object rotating device (10.f, 10.r) is arranged to rotate the object (B) with a rotating velocity (v_B) depending on the or at least one signal delivered by the tachometer (32) on board of the wrapping apparatus (3) being indicative of the current travelling velocity (v).

10. Wrapping apparatus according to one of the preceding claims,
    **characterized in that**
    a control unit is mounted on board of the wrapping apparatus (3),
    wherein the control unit is arranged to receive signals from a tachometer (32),
    wherein the received signals are indicative of the current travelling velocity (v) over ground (G) of the wrapping apparatus (3) and
    wherein the control unit is arranged to generate control inputs for the object rotating device (10.f, 10.r),
    thereby causing the object rotating device (10.f, 10.r) to rotate the object (B) with the rotating velocity (v_B), depending on the measured travelling velocity value (v).

11. Wrapping apparatus according to one of the preceding claims,
    **characterized in that**
    the wrapping apparatus (3) provides a chamber (Ch) arranged to contain an object (B) to be wrapped,
    wherein the object supporting device (15) is arranged to carry an object (B) contained in the chamber (Ch) and
    wherein the object rotating device (6) is arranged to rotate an object (B) contained in the chamber (Ch) with the selected rotating velocity (v_B).

12. Wrapping apparatus according to one of the preceding claims,
    **characterized in that**
    the object supporting device (15) is pivotal with respect to the wrapping apparatus frame (2.1, 2.r, 40) and
    the wrapping apparatus (3) further comprises a pivoting actuator (59) for pivoting the object supporting device (15) with respect to the wrapping apparatus frame (2.1, 2.r, 40), wherein the wrapping apparatus (3) is arranged to deposit the wrapped object (B) on the ground (G)
    by pivoting the object supporting device (15) while the object supporting device (15) rotates the object (B) with the selected and achieved rotating velocity (v_B).

13. Wrapping apparatus according to claim 12,
    **characterized in that**
    the pivoting actuator (59) is arranged to pivot the object supporting device (15) with respect to the wrapping apparatus frame (2.1, 2.r, 40)

    - around a device pivoting axis (12) and
    - about a pivoting angle which depends on the measured travelling velocity value (v).

14. Wrapping apparatus according to claim 12 or claim 13,

**characterized in that**

the object rotating device (10.f, 10.r) is arranged to rotate the object (B) with the rotating velocity ($v\_B$) around the object rotating axis (CA) perpendicular to the travelling direction (TD) and

the pivoting actuator (59) is arranged to pivot the object supporting device (15) with respect to the wrapping apparatus frame (2.1, 2.r, 40) around a device pivoting axis (12) parallel to the object rotating axis (CA).

**15.** Wrapping apparatus according to one of the preceding claims,
**characterized in that**
a guiding member is positioned - seen in the travelling direction (TD) - behind the object supporting device (15), wherein the wrapping apparatus (3) is arranged such that the removed object (B) rolls

- from the object supporting device (15) onto the guiding member and
- from the guiding member onto the ground (G).

**16.** Method for wrapping an object (B)
by using a wrapping apparatus (3) comprising

- an object supporting device (15),
- a wrapping apparatus frame (2.1, 2.r, 40) carrying the object supporting device (15),
- an object rotating device (10.f, 10.r), and
- at least one reservoir holder (21) for holding a reservoir (22) of wrapping material, wherein the method comprises the steps that
- the wrapping apparatus (3) is moved over ground (G) in a travelling direction (TD),
- the object (B) to be wrapped is placed onto the object supporting device (15),
- the object (B) is carried by the object supporting device (15) while being wrapped,
- the object rotating device (10.f, 10.r) rotates the object (B) on the object
- supporting device (15) with respect to the wrapping apparatus frame (2.1, 2.r, 40) around an object rotating axis (CA) being perpendicular to the travelling direction (TD),
- the rotated object (B) on the object supporting device (15) is wrapped into at least one web (23) of wrapping material taken from the or from one reservoir (22) held by the or one reservoir holder (21), and
- the wrapped object (B) is removed from the object supporting device (15) and is deposited on the ground (G),

**characterized in that**

the object rotating device (10.f, 10.r) is arranged to rotate the object (B) with respect to the wrapping apparatus frame (2.1, 2.r, 40) with a velocity ($v\_B$) selected out of different possible rotational velocities and the method comprises the further steps that

- at least one value (v) indicative of the current travelling velocity over ground (G) of the moved wrapping apparatus (3) is measured and
- the velocity ($v\_B$) with which the object rotating device (10.f, 10.r) rotates the object (B) on the object supporting device (15) with respect to the wrapping apparatus frame (2.1, 2.r, 40) is automatically selected and achieved

at least in the end of wrapping the object (B) on the object supporting device (15) and before the object (B) is removed from the object supporting device (15), wherein the rotational velocity ($v\_B$) is selected depending on the or at least one measured travelling velocity value (v).

**17.** Wrapping method according to claim 16,
**characterized in that**
the step that the object rotating device (10.f, 10.r) rotates the object (B) comprises the steps that
the object rotating device (10.f, 10.r)

- first rotates the object (B) on the object supporting device (15) with a given initial rotating velocity and
- later rotates the object (B) on the object supporting device (15) with the selected rotating velocity ($v\_B$) depending on the current travelling velocity value (v),

wherein the object rotating device (10.f, 10.r) rotates the object (B) with the selected rotating velocity ($v\_B$) selected depending on the current travelling velocity value (v) at least when the step of removing the object (B) from the object supporting device (15) is performed.

**18.** Wrapping method according to claim 16 or claim 17,
**characterized in that**
the object supporting device (15) is pivotal with respect to the wrapping apparatus frame (2.1, 2.r, 40), and
the wrapping apparatus (3) comprises a pivoting actuator (59) for pivoting the object supporting device (15) with
respect to the wrapping apparatus frame (2.1, 2.r, 40), wherein the step of removing the object (B) from the object
supporting device (15) comprises the step that
the pivoting actuator (59) pivots the object supporting device (15) with respect to the wrapping apparatus frame
(2.1, 2.r, 40) around a device pivoting axis (12) parallel to the object rotating axis (CA)
while the object (B) on the pivoted object supporting device (15) is rotated around the object center axis (CA) with
the selected rotational velocity (v_B).

**19.** Wrapping method according to one of the claims 16 to 18,
**characterized in that**
the step of rotating the object (B) on the object supporting device (15) comprises the step that
a required rotating velocity for the object (B) is automatically selected depending on the current measured travelling
velocity (v),
at least one time a value indicative of the actual rotating velocity (v_B) of the object (B) with respect to the wrapping
apparatus frame (2.1, 2.r, 40) is measured, and
the object rotating device (10.f, 10.r) performs the object rotation depending

- on the required rotating velocity and
- on the or at least one measured actual rotating velocity (v_B).


**Patentansprüche**

**1.** Einwickelvorrichtung (3), mit:

- einer Objekt-Abstützeinrichtung (15),
- einem Einwickelvorrichtungsrahmen (2.I, 2.r, 40), der die Objekt-Abstützeinrichtung (15) trägt,
- einer Objekt-Rotationseinrichtung (10.f, 10.r), und
- mindestens einem Vorratshalter (21) zum Halten eines Vorrats (22) von Einwickelmaterial,

wobei die Einwickelvorrichtung (3) dazu angeordnet ist, in einer Bewegungsrichtung (TD) über einen Boden (G)
bewegt zu werden,
wobei die Objekt-Abstützeinrichtung (15) dazu angeordnet ist, ein einzuwickelndes Objekt (B) zu tragen,
wobei die Objekt-Rotationseinrichtung (10.f, 10.r) dazu angeordnet ist, das auf der Objekt-Abstützeinrichtung (15)
getragene Objekt (B) relativ zu dem Einwickelvorrichtungsrahmen (2.I, 2.r, 40) um eine zu der Bewegungsrichtung
(TD) senkrechte Objekt-Rotationsachse (CA) zu rotieren,
wobei die Einwickelvorrichtung (3) dazu angeordnet ist,

- das rotierte Objekt (B) auf der Objekt-Abstützeinrichtung (15) zu tragen,
- das rotierte Objekt (B) auf der Objekt-Abstützeinrichtung (15) in mindestens ein aus dem oder aus mindestens
einem von dem oder einem Vorratshalter (21) gehaltenen Vorrat (22) entnommenes Gewebe (23) von Einwickelmaterial einzuwickeln,
- das eingewickelte Objekt (B) von der Objekt-Abstützeinrichtung (15) zu entfernen und
- es auf dem Boden (G) abzusetzen,

**dadurch gekennzeichnet, dass**
die Objekt-Rotationseinrichtung (10.f, 10.r) dazu angeordnet ist, das Objekt (B) auf der Objekt-Abstützeinrichtung
(15) relativ zu dem Einwickelvorrichtungsrahmen (2.I, 2.r, 40) mit einer aus verschiedenen möglichen Rotationsgeschwindigkeiten ausgewählten Geschwindigkeit (v_B) zu rotieren und
die Einwickelvorrichtung (3) dazu angeordnet ist, automatisch eine Rotationsgeschwindigkeit (v_B) auszuwählen
und die ausgewählte Rotationsgeschwindigkeit (v_B) für die durch die Objekt-Rotationseinrichtung (10.f, 10.r) durchgeführte Rotation des Objekts (B) relativ zu dem Einwickelvorrichtungsrahmen (2.I, 2.r, 40)

- mindestens am Ende des Einwickelns des Objekts (B) auf der Objekt-Abstützeinrichtung (15) und
- bevor das Objekt (B) von der Objekt-Abstützeinrichtung (15) entfernt wird zu erreichen,

wobei die Einwickelvorrichtung (3) dazu angeordnet ist, die Rotationsgeschwindigkeit (v_B) auszuwählen abhängig von einem die aktuelle Bewegungsgeschwindigkeit (v) der bewegten Einwickelvorrichtung (3) über den Boden (G) anzeigenden gemessenen Wert.

2. Einwickelvorrichtung nach Anspruch 1,
**dadurch gekennzeichnet, dass**
die Einwickelvorrichtung (3) dazu angeordnet ist, automatisch die Rotationsgeschwindigkeit (v_B) für die Rotation des Objekts (B) abhängig

- von der gemessenen aktuellen Bewegungsgeschwindigkeit (v) und
- zusätzlich von einem Maß (d_B) des rotierten Objekts in eine Richtung
- senkrecht zu der Objekt-Rotationsachse (CA)
auszuwählen.

3. Einwickelvorrichtung nach einem der vorhergehenden Ansprüche,
**dadurch gekennzeichnet, dass**
die Objekt-Rotationseinrichtung (10.f, 10.r) Folgendes aufweist:

- mindestens ein rotierbares Element (10.f, 10.r), das zum Berühren des Objekts (B) auf der Objekt-Abstützeinrichtung (15) angeordnet ist, und
- einen Motor zum Rotieren des oder eines rotierbaren Elements (10.f, 10.r),

wobei der Motor dazu angeordnet ist, das rotierbare Element (10.f, 10.r) mindestens am Ende des Einwickelns des Objekts (B) auf der Objekt-Abstützeinrichtung (15) mit einer ausgewählten Rotationsgeschwindigkeit ($\omega$_R) zu rotieren, und
wobei die Rotationsfrequenz ($\omega$_R) des rotierten rotierbaren Elements (10.f, 10.r), die ausgewählt und aufrechterhalten wird oder am Ende des Einwickelns des Objekts (B) erreicht wird,
von dem gemessenen aktuellen Bewegungsgeschwindigkeitswert (v) abhängt.

4. Einwickelvorrichtung nach Anspruch 3,
**dadurch gekennzeichnet, dass**
die Rotationsfrequenz ($\omega$_R) des rotierten rotierbaren Elements (10.f, 10.r), die ausgewählt und aufrechterhalten wird oder am Ende des Einwickelns des Objekts (B) erreicht wird,
zusätzlich abhängt von einem Maß (d_B) des rotierten Objekts (B) in einer Richtung senkrecht zu der Objekt-Rotationsachse (CA).

5. Einwickelvorrichtung nach einem der vorhergehenden Ansprüche,
**dadurch gekennzeichnet, dass**
die Einwickelvorrichtung (3) einen Rotationssensor (41) aufweist, der dazu angeordnet ist, einen die tatsächliche Rotationsgeschwindigkeit (v_B) des von der Objekt-Abstützeinrichtung (15) getragenen relativ zu dem Einwickel-vorrichtungsrahmen (2.l, 2.r, 40) rotierten Objekts (B) anzeigenden Wert zu messen,
wobei die Objekt-Rotationseinrichtung (10.f, 10.r) dazu angeordnet ist, die Rotation des Objekts (B) abhängig von

- der gemessenen aktuellen Bewegungsgeschwindigkeit (v) und
- von empfangenen, die gemessene tatsächliche Rotationsgeschwindigkeit (v_B) des Objekts (B) anzeigenden Signalen

durchzuführen.

6. Einwickelvorrichtung nach einem der vorhergehenden Ansprüche,
**dadurch gekennzeichnet, dass**
die Objekt-Rotationseinrichtung (10.f, 10.r) dazu angeordnet ist, das Objekt (B) mindestens am Ende des Einwickelns des Objekts (B) mit einer ausgewählten Rotationsgeschwindigkeit (v_B) zu rotieren,
sodass mindestens in dem Moment, in dem das abgelegte Objekt (B) den Boden (G) berührt, im Wesentlichen keine Relativbewegung zwischen

- dem Objekt (B) und
- dem Boden (G), über den die Einwickelvorrichtung (3) bewegt wird,

auftritt.

7. Einwickelvorrichtung nach einem der vorhergehenden Ansprüche,
**dadurch gekennzeichnet, dass**
die Objekt-Rotationseinrichtung (10.f, 10.r) dazu angeordnet ist, das von der Objekt-Abstützeinrichtung (15) getragene Objekt (B) wahlweise

- mit einer vorgegebenen Rotationsgeschwindigkeit oder
- mit der abhängig von dem gemessenen Bewegungsgeschwindigkeitswert (v) ausgewählten Rotationsgeschwindigkeit (v_B)

relativ zu dem Einwickelvorrichtungsrahmen (2.l, 2.r, 40) zu rotieren.

8. Einwickelvorrichtung nach einem der vorhergehenden Ansprüche,
**dadurch gekennzeichnet, dass**
die Objekt-Rotationseinrichtung (10.f, 10.r) dazu angeordnet ist, das Objekt (B) mit einer Rotationsgeschwindigkeit (v_B) zu rotieren, die mindestens am Ende des Einwickelns des Objekts (B) abhängt

- von dem gemessenen aktuellen Bewegungsgeschwindigkeitswert (v) und zusätzlich
- von einem eine Neigung der Einwickelvorrichtung (3) anzeigenden Wert.

9. Einwickelvorrichtung nach einem der vorhergehenden Ansprüche,
**dadurch gekennzeichnet, dass**
ein Tachometer (32)

- an Bord der Einwickelvorrichtung (3) montiert ist und
- dazu angeordnet ist, einen Wert (v) zu messen, der eine aktuelle Bewegungsgeschwindigkeit der Einwickelvorrichtung (3) über den Boden (G) anzeigt,

wobei die Objekt-Rotationseinrichtung (10.f, 10.r) dazu angeordnet ist, das Objekt (B) mit einer Rotationsgeschwindigkeit (v_B)
abhängig von dem oder mindestens einem von dem Tachometer (32) an Bord der Einwickelvorrichtung (3) abgegebenen, die aktuelle Bewegungsgeschwindigkeit (v) anzeigenden Signal zu rotieren.

10. Einwickelvorrichtung nach einem der vorhergehenden Ansprüche,
**dadurch gekennzeichnet, dass**
eine Steuer- und/oder Regeleinheit an Bord der Einwickelvorrichtung (3) montiert ist,
wobei die Steuer- und/oder Regeleinheit dazu angeordnet ist, Signale von einem Tachometer (32) zu empfangen,
wobei die empfangenen Signale die aktuelle Bewegungsgeschwindigkeit (v) der Einwickelvorrichtung (3) über den Boden (G) anzeigen und
wobei die Steuer- und/oder Regeleinheit dazu angeordnet ist, Steuer- und/oder Regel-Eingangssignale für die Objekt-Rotationseinrichtung (10.f, 10.r) zu erzeugen,
wodurch sie verursacht, dass die Objekt-Rotationseinrichtung (10.f, 10.r) das Objekt (B) mit der Rotationsgeschwindigkeit (v_B) rotiert,
abhängig von dem gemessenen Bewegungsgeschwindigkeitswert (v).

11. Einwickelvorrichtung nach einem der vorhergehenden Ansprüche,
**dadurch gekennzeichnet, dass**
die Einwickelvorrichtung (3) eine Kammer (Ch) bereitstellt, die dazu angeordnet ist, ein einzuwickelndes Objekt (B) zu enthalten,
wobei die Objekt-Abstützeinrichtung (15) dazu angeordnet ist, ein in der Kammer (Ch) enthaltenes Objekt (B) zu tragen, und
wobei die Objekt-Rotationseinrichtung (6) dazu angeordnet ist, ein in der Kammer (Ch) enthaltenes Objekt (B) mit der ausgewählten Rotationsgeschwindigkeit (v_B) zu rotieren.

12. Einwickelvorrichtung nach einem der vorhergehenden Ansprüche,
**dadurch gekennzeichnet, dass**
die Objekt-Abstützeinrichtung (15) relativ zu dem Einwickelvorrichtungsrahmen (2.l, 2.r, 40) schwenkbar ist und

die Einwickelvorrichtung (3) weiterhin einen Schwenkaktuator (59) zum Verschwenken der Objekt-Abstützeinrichtung (15) relativ zu dem Einwickelvorrichtungsrahmen (2.l, 2.r, 40) aufweist, wobei die Einwickelvorrichtung (3) dazu angeordnet ist, das eingewickelte Objekt (B) auf dem Boden (G) abzusetzen, indem sie die Objekt-Abstützeinrichtung (15) verschwenkt, während die Objekt-Abstützeinrichtung (15) das Objekt (B) mit der ausgewählten und erreichten Rotationsgeschwindigkeit (v_B) rotiert.

13. Einwickelvorrichtung nach Anspruch 12,
**dadurch gekennzeichnet, dass**
der Schwenkaktuator (59) dazu angeordnet ist, die Objekt-Abstützeinrichtung (15) relativ zu dem Einwickelvorrichtungsrahmen (2.l, 2.r, 40)

- um eine Einrichtungsschwenkachse (12) und
- um einen Schwenkwinkel, der von dem gemessenen Bewegungsgeschwindigkeitswert (v) abhängt,

zu verschwenken.

14. Einwickelvorrichtung nach Anspruch 12 oder Anspruch 13,
**dadurch gekennzeichnet, dass**
die Objekt-Rotationseinrichtung (10.f, 10.r) dazu angeordnet ist, das Objekt (B) mit der Rotationsgeschwindigkeit (v_B) um die Objekt-Rotationsachse (CA) senkrecht zu der Bewegungsrichtung (TD) zu rotieren und
der Schwenkaktuator (59) dazu angeordnet ist, die Objekt-Abstützeinrichtung (15) relativ zu dem Einwickelvorrichtungsrahmen (2.l, 2.r, 40) um eine Einrichtungsschwenkachse (12) parallel zu der Objekt-Rotationsachse (CA) zu verschwenken.

15. Einwickelvorrichtung nach einem der vorhergehenden Ansprüche,
**dadurch gekennzeichnet, dass**
ein Führungselement - gesehen in der Bewegungsrichtung (TD) - hinter der Objekt-Abstützeinrichtung (15) positioniert ist,
wobei die Einwickelvorrichtung (3) so angeordnet ist, dass das entfernte Objekt (B)

- von der Objekt-Abstützeinrichtung (15) auf das Führungselement und
- von dem Führungselement auf den Boden (G)

rollt.

16. Verfahren zum Einwickeln eines Objekts (B)
unter Verwendung einer Einwickelvorrichtung (3), mit:

- einer Objekt-Abstützeinrichtung (15),
- einem die Objekt-Abstützeinrichtung (15) tragenden Einwickelvorrichtungsrahmen (2.l, 2.r, 40),
- einer Objekt-Rotationseinrichtung (10.f, 10.r) und
- mindestens einem Vorratshalter (21) zum Halten eines Vorrats (22) von Einwickelmaterial,

wobei das Verfahren die folgenden Schritte aufweist:

- die Einwickelvorrichtung (3) wird über einen Boden (G) in einer Bewegungsrichtung (TD) bewegt,
- das einzuwickelnde Objekt (B) wird auf der Objekt-Abstützeinrichtung (15) platziert,
- das Objekt (B) wird durch die Objekt-Abstützeinrichtung (15) getragen, während es eingewickelt wird,
- die Objekt-Rotationseinrichtung (10.f, 10.r) rotiert das Objekt (B) relativ zu dem Einwickelvorrichtungsrahmen (2.l, 2.r, 40) um eine zu der Bewegungsrichtung (TD) senkrechte Objekt-Rotationsachse (CA) auf der Objekt-Abstützeinrichtung (15),
- das rotierende Objekt (B) auf der Objekt-Abstützeinrichtung (15) wird in mindestens ein aus dem oder einem von dem oder einem Vorratshalter (21) gehaltenen Vorrat (22) entnommenes Gewebe (23) von Einwickelmaterial eingewickelt, und
- dass eingewickelte Objekt (B) wird von der Objekt-Abstützeinrichtung (15) entfernt und auf dem Boden (G) abgesetzt,

**dadurch gekennzeichnet, dass**

die Objekt-Rotationseinrichtung (10.f, 10.r) dazu angeordnet ist, das Objekt (B) relativ zu dem Einwickelvorrichtungsrahmen (2.l, 2.r, 40) mit einer aus verschiedenen möglichen Rotationsgeschwindigkeiten ausgewählten Geschwindigkeit (v_B) zu rotieren, und
das Verfahren die folgenden weiteren Schritte aufweist:

- mindestens ein die aktuelle Bewegungsgeschwindigkeit der Einwickelvorrichtung (3) über den Boden (G) anzeigender Wert (v) wird gemessen und
- die Geschwindigkeit (v_B), mit der die Objekt-Rotationseinrichtung (10.f, 10.r) das Objekt (B) auf der Objekt-Abstützeinrichtung (15) relativ zu dem Einwickelvorrichtungsrahmen (2.l, 2.r, 40) rotiert, wird automatisch ausgewählt und erreicht

mindestens am Ende des Einwickelns des Objekts (B) auf der Objekt-Abstützeinrichtung (15) und bevor das Objekt (B) von der Objekt-Abstützeinrichtung (15) entfernt wird, wobei die Rotationsgeschwindigkeit (v_B) abhängig von dem oder einem gemessenen Bewegungsgeschwindigkeitswert (v) ist.

**17.** Einwickelvorrichtung nach Anspruch 16,
**dadurch gekennzeichnet, dass**
der Schritt, dass die Objekt-Rotationseinrichtung (10.f, 10.r) das Objekt (B) rotiert, die Schritte aufweist, dass die Objekt-Rotationseinrichtung (10.f, 10.r)

- zuerst das Objekt (B) mit einer vorgegebenen Initial-Rotationsgeschwindigkeit auf der Objekt-Abstützeinrichtung (15) rotiert und
- später das Objekt (B) auf der Objekt-Abstützeinrichtung (15) mit der ausgewählten Rotationsgeschwindigkeit (v_B) abhängig von dem aktuellen Bewegungsgeschwindigkeitswert (v) rotiert,

wobei die Objekt-Rotationseinrichtung (10.f, 10.r) das Objekt (B) mit der ausgewählten Rotationsgeschwindigkeit (v_B) abhängig von dem aktuellen Bewegungsgeschwindigkeitswert (v) rotiert
mindestens, wenn der Schritt des Entfernens des Objekts (B) von der Objekt-Abstützeinrichtung (15) ausgeführt wird.

**18.** Einwickelvorrichtung nach Anspruch 16 oder Anspruch 17,
**dadurch gekennzeichnet, dass**
die Objekt-Abstützeinrichtung (15) relativ zu dem Einwickelvorrichtungsrahmen (2.l, 2.r, 40) schwenkbar ist und
die Einwickelvorrichtung (3) einen Schwenkaktuator (59) zum Verschwenken der Objekt-Abstützeinrichtung (15) relativ zu dem Einwickelvorrichtungsrahmen (2.l, 2.r, 40) aufweist, wobei der Schritt des Entfernens des Objekts (B) von der Objekt-Abstützeinrichtung (15) den Schritt aufweist, dass
der Schwenkaktuator (59) die Objekt-Abstützeinrichtung (15) relativ zu dem Einwickelvorrichtungsrahmen (2.l, 2.r, 40) um eine zu der Objekt-Rotationsachse (CA) parallele Einrichtungs-Schwenkachse (12) verschwenkt,
wobei das Objekt (B) auf der verschwenkten Objekt-Abstützeinrichtung (15) mit der ausgewählten Rotationsgeschwindigkeit (v_B) um die Objekt-Zentralachse (CA) rotiert wird.

**19.** Einwickelvorrichtung nach einem der Ansprüche 16 bis 18,
**dadurch gekennzeichnet, dass**
der Schritt des Rotierens des Objekts (B) auf der Objekt-Abstützeinrichtung (15) den Schritt aufweist, dass
eine notwendige Rotationsgeschwindigkeit für das Objekt (B) abhängig von der aktuellen gemessenen Bewegungsgeschwindigkeit (v) automatisch ausgewählt wird,
mindestens einmal ein die tatsächliche Rotationsgeschwindigkeit (v_B) des Objekts (B) relativ zu dem Einwickelvorrichtungsrahmen (2.l, 2.r, 40) anzeigender Wert gemessen wird und
die Objekt-Rotationseinrichtung (10.f, 10.r) die Objektrotation abhängig

- von der notwendigen Rotationsgeschwindigkeit und
- von der oder mindestens einer gemessenen tatsächlichen Rotationsgeschwindigkeit (v_B) durchführt.

## Revendications

**1.** Appareil d'emballage (3) comprenant

- un dispositif de support d'objet (15),

- un cadre d'appareil d'emballage (2.1, 2.r, 40) portant le dispositif de support d'objet (15),
- un dispositif de rotation d'objet (10.f, 10.r), et
- au moins un support de réservoir (21) pour maintenir un réservoir (22) de matériau d'emballage, dans lequel l'appareil d'emballage (3) est agencé pour être déplacé sur le sol (G) dans une direction de déplacement (TD),

dans lequel le dispositif de support d'objet (15) est agencé pour porter un objet (B) à emballer,
dans lequel le dispositif de rotation d'objet (10.f, 10.r) est agencé pour tourner l'objet (B) porté sur le dispositif de support d'objet (15) par rapport au cadre d'appareil d'emballage (2.1, 2.r, 40) autour d'un axe de rotation d'objet (CA) qui est perpendiculaire à la direction de déplacement (TD),
dans lequel l'appareil d'emballage (3) est agencé

- pour porter l'objet tourné (B) sur le dispositif de support d'objet (15),
- pour emballer l'objet tourné (B) sur le dispositif de support d'objet (15) dans au moins une bande (23) de matériau d'emballage pris du ou d'au moins un réservoir (22) maintenu par le ou un support de réservoir (21),
- pour retirer l'objet emballé (B) du dispositif de support d'objet (15) et
- pour le déposer sur le sol (G),

**caractérisé en ce que**
le dispositif de rotation d'objet (10.f, 10.r) est agencé pour tourner l'objet (B) sur le dispositif de support d'objet (15) par rapport au cadre d'appareil d'emballage (2.1, 2.r, 40) à une vitesse (v_B) sélectionnée parmi différentes vitesses de rotation possibles et
l'appareil d'emballage (3) est agencé pour sélectionner automatiquement une vitesse de rotation (v_B) et pour atteindre la vitesse de rotation sélectionnée (v_B) pour la rotation de l'objet (B) par rapport au cadre d'appareil d'emballage (2.1, 2.r, 40) réalisé par le dispositif de rotation d'objet (10.f, 10.r),

- au moins à la fin de l'emballage de l'objet (B) sur le dispositif de support d'objet (15) et
- avant que l'objet (B) ne soit retiré du dispositif de support d'objet (15),

dans lequel l'appareil d'emballage (3) est agencé pour sélectionner la vitesse de rotation (v_B) selon une valeur mesurée indiquant la vitesse de déplacement actuelle (v) sur le sol (G) de l'appareil d'emballage déplacé (3).

2. Appareil d'emballage selon la revendication 1,
**caractérisé en ce que**
l'appareil d'emballage (3) est agencé pour sélectionner automatiquement la vitesse de rotation (v_B) pour la rotation de l'objet (B) selon

- la vitesse de déplacement actuelle mesurée (v) et
- en outre une dimension (d_B) de l'objet tourné (B) dans une direction
- perpendiculaire à l'axe de rotation d'objet (CA).

3. Appareil d'emballage selon l'une des revendications précédentes,
**caractérisé en ce que**
le dispositif de rotation d'objet (10.f, 10.r) comprend

- au moins un élément rotatif (10.f, 10.r) agencé pour toucher l'objet (B) sur le dispositif de support d'objet (15) et
- un moteur pour la rotation du ou d'un élément rotatif (10.f, 10.r),

dans lequel le moteur est agencé pour tourner l'élément rotatif (10.f, 10.r) au moins à la fin de l'emballage de l'objet (B) sur le dispositif de support d'objet (15) à une vitesse de rotation sélectionnée ($\omega$_R) et
dans lequel la fréquence de rotation ($\omega$_R) de l'élément rotatif tourné (10.f, 10.r) qui est sélectionnée et maintenue ou atteinte à la fin de l'emballage de l'objet (B) dépend de la valeur de vitesse de déplacement actuelle mesurée (v).

4. Appareil d'emballage selon la revendication 3,
**caractérisé en ce que**
la fréquence rotative ($\omega$_R) de l'élément rotatif tourné (10.f, 10.r) qui est sélectionnée et maintenue ou atteinte à la fin de l'emballage de l'objet (B) dépend en outre d'une dimension (d_B) de l'objet tourné (B) dans une direction perpendiculaire à l'axe de rotation d'objet (CA).

**5.** Appareil d'emballage selon l'une des revendications précédentes,
**caractérisé en ce que**
l'appareil d'emballage (3) comprend un capteur de rotation (41) qui est agencé pour mesurer une valeur indiquant la vitesse de rotation réelle (v_B) de l'objet tourné (B) porté par le dispositif de support d'objet (15) par rapport au cadre d'appareil d'emballage (2.1, 2.r, 40),
dans lequel le dispositif de rotation d'objet (10.f, 10.r) est agencé pour réaliser la rotation de l'objet (B) selon

- la vitesse de déplacement actuelle mesurée (v) et
- des signaux reçus indiquant la vitesse de rotation réelle mesurée (v_B) de l'objet (B).

**6.** Appareil d'emballage selon l'une des revendications précédentes,
**caractérisé en ce que**
le dispositif de rotation d'objet (10.f, 10.r) est agencé pour tourner l'objet (B) au moins à la fin de l'emballage de l'objet (B) à une vitesse de rotation sélectionnée (v_B)
de sorte qu'au moins en ce moment dans lequel l'objet déposé (B) touche le sol (G) sensiblement aucun mouvement relatif entre

- l'objet (B) et
- le sol (G) sur lequel l'appareil d'emballage (3) est déplacé n'apparaisse.

**7.** Appareil d'emballage selon l'une des revendications précédentes,
**caractérisé en ce que**
le dispositif de rotation d'objet (10.f, 10.r) est agencé pour tourner l'objet (B) porté par le dispositif de support d'objet (15) par rapport au cadre d'appareil d'emballage (2.1, 2.r, 40) sélectivement

- à une vitesse de rotation donnée ou
- à la vitesse de rotation (v_B) qui est sélectionnée selon la valeur de vitesse de déplacement mesurée (v).

**8.** Appareil d'emballage selon l'une des revendications précédentes,
**caractérisé en ce que**
le dispositif de rotation d'objet (10.f, 10.r) est agencé pour tourner l'objet (B) à une vitesse de rotation (v_B) qui dépend au moins à la fin de l'emballage de l'objet (B)

- de la valeur de vitesse de déplacement actuelle mesurée (v) et en outre
- d'une valeur indiquant une inclinaison de l'appareil d'emballage (3).

**9.** Appareil d'emballage selon l'une des revendications précédentes,
**caractérisé en ce que**
un tachymètre (32)

- est monté à bord de l'appareil d'emballage (3) et
- est agencé pour mesurer une valeur (v) indiquant la vitesse de déplacement actuelle de l'appareil de l'emballage (3) sur le sol (G),

dans lequel le dispositif de rotation d'objet (10.f, 10.r) est agencé pour tourner l'objet (B) à une vitesse de rotation (v_B) selon le ou au moins un signal fourni par le tachymètre (32) à bord de l'appareil d'emballage (3) indiquant la vitesse de déplacement actuelle (v).

**10.** Appareil d'emballage selon l'une des revendications précédentes,
**caractérisé en ce que**
une unité de commande est montée à bord de l'appareil d'emballage (3),
dans lequel l'unité de commande est agencée pour recevoir des signaux d'un tachymètre (32),
dans lequel les signaux reçus indiquent la vitesse de déplacement actuelle (v) sur le sol (G) de l'appareil d'emballage (3) et
dans lequel l'unité de commande est agencée pour générer des entrées de commande pour le dispositif de rotation d'objet (10.f, 10.r),
amenant ainsi le dispositif de rotation d'objet (10.f, 10.r) à tourner l'objet (B) à la vitesse de rotation (v_B),
selon la valeur de vitesse de déplacement mesurée (v).

**11.** Appareil d'emballage selon l'une des revendications précédentes,
**caractérisé en ce que**
l'appareil d'emballage (3) fournit une chambre (Ch) agencée pour contenir un objet (B) à emballer,
dans lequel le dispositif de support d'objet (15) est agencé pour porter un objet (B) contenu dans la chambre (Ch) et
dans lequel le dispositif de rotation d'objet (6) est agencé pour tourner un objet (B) contenu dans la chambre (Ch)
à la vitesse de rotation sélectionnée (v_B).

**12.** Appareil d'emballage selon l'une des revendications précédentes,
**caractérisé en ce que**
le dispositif de support d'objet (15) est pivotant par rapport au cadre d'appareil d'emballage (2.1, 2.r, 40) et
l'appareil d'emballage (3) comprend en outre un actionneur pivotant (59) pour le pivotement du dispositif de support
d'objet (15) par rapport au cadre d'appareil d'emballage (2.1, 2.r, 40),
dans lequel l'appareil d'emballage (3) est agencé pour déposer l'objet emballé (B) sur le sol (G),
par pivotement du dispositif de support d'objet (15) alors que le dispositif de support d'objet (15) tourne l'objet (B)
à la vitesse de rotation sélectionnée et atteinte (v_B).

**13.** Appareil d'emballage selon la revendication 12,
**caractérisé en ce que**
l'actionneur pivotant (59) est agencé pour pivoter le dispositif de support d'objet (15) par rapport au cadre d'appareil
d'emballage (2.1, 2.r, 40)

- autour d'un axe de pivotement de dispositif (12) et
- autour d'un angle de pivotement qui dépend de la valeur de vitesse de déplacement mesurée (v).

**14.** Appareil d'emballage selon la revendication 12 ou 13,
**caractérisé en ce que**
le dispositif de rotation d'objet (10.f, 10.r) est agencé pour tourner l'objet (B) à la vitesse de rotation (v_B) autour
de l'axe de rotation d'objet (CA) perpendiculaire à la direction de déplacement (TD) et
l'actionneur pivotant (59) est agencé pour pivoter le dispositif de support d'objet (15) par rapport au cadre d'appareil
d'emballage (2.1, 2.r, 40) autour d'un axe de pivotement de dispositif (12) parallèle à l'axe de rotation d'objet (CA).

**15.** Appareil d'emballage selon l'une des revendications précédentes,
**caractérisé en ce que**
un élément de guidage est positionné - vu dans la direction de déplacement (TD) - derrière le dispositif de support
d'objet (15),
dans lequel l'appareil de d'emballage (3) est agencé de sorte que l'objet retiré (B) roule

- du dispositif de support d'objet (15) sur l'élément de guidage et
- de l'élément de guidage sur le sol (G).

**16.** Procédé d'emballage d'un objet (B) par utilisation d'un appareil d'emballage (3) comprenant

- un dispositif de support d'objet (15),
- un cadre d'appareil d'emballage (2.1, 2.r, 40) portant le dispositif de support d'objet (15),
- un dispositif de rotation d'objet (10.f, 10.r), et
- au moins un support de réservoir (21) pour maintenir un réservoir (22) de matériau d'emballage, dans lequel
le procédé comprend les étapes dans lesquelles
- l'appareil d'emballage (3) est déplacé sur le sol (G) dans une direction de déplacement (TD),
- l'objet (B) à emballer est placé sur le dispositif de support d'objet (15),
- l'objet (B) est porté par le dispositif de support d'objet (15) tout en étant emballé,
- le dispositif de rotation d'objet (10.f, 10.r) tourne l'objet (B) sur le dispositif de support d'objet (15) par rapport
au cadre d'appareil d'emballage (2.1, 2.r, 40) autour d'un axe de rotation d'objet (CA) qui est perpendiculaire
à la direction de déplacement (TD),
- l'objet tourné (B) sur le dispositif de support d'objet (15) est emballé dans au moins une bande (23) de matériau
d'emballage pris du ou d'un réservoir (22) contenu par le ou un support de réservoir (21), et
- l'objet emballé (B) est retiré du dispositif de support d'objet (15) et est déposé sur le sol (G),

**caractérisé en ce que**

le dispositif de rotation d'objet (10.f, 10.r) est agencé pour tourner l'objet (B) par rapport au cadre d'appareil d'emballage (2.1, 2.r, 40) à une vitesse (v_B) sélectionnée parmi différentes vitesses de rotation possibles et le procédé comprend les autres étapes dans lesquelles

- au moins une valeur (v) indiquant la vitesse de déplacement actuelle sur le sol (G) de l'appareil d'emballage déplacé (3) est mesurée et
- la vitesse (v_B) à laquelle le dispositif de rotation d'objet (10.f, 10.r) tourne l'objet (B) sur le dispositif de support d'objet (15) par rapport au cadre d'appareil d'emballage (2.1, 2.r, 40) est automatiquement sélectionnée et atteinte

au moins à la fin de l'emballage de l'objet (B) sur le dispositif de support d'objet (15) et avant que l'objet (B) ne soit retiré du dispositif de support d'objet (15), dans lequel la vitesse de rotation (v_B) est sélectionnée selon la ou au moins une valeur de vitesse de déplacement mesurée (v).

17. Procédé d'emballage selon la revendication 16,
**caractérisé en ce que**
l'étape dans laquelle le dispositif de rotation d'objet (10.f, 10.r) tourne l'objet (B) comprend les étapes dans lesquelles le dispositif de rotation d'objet (10.f, 10.r)

- tourne tout d'abord l'objet (B) sur le dispositif de support d'objet (15) à une vitesse de rotation initiale donnée et
- tourne plus tard l'objet (B) sur le dispositif de support d'objet (15) à la vitesse de rotation sélectionnée (v_B) selon la valeur de vitesse de déplacement actuelle (v),

dans lequel le dispositif de rotation d'objet (10.f, 10.r) tourne l'objet (B) à la vitesse de rotation sélectionnée (v_B) sélectionnée selon la valeur de vitesse de déplacement actuelle (v) au moins lorsque l'étape de retrait de l'objet (B) du dispositif de support d'objet (15) est réalisée.

18. Procédé d'emballage selon la revendication 16 ou 17,
**caractérisé en ce que**
le dispositif de support d'objet (15) est pivotant par rapport au cadre d'appareil d'emballage (2.1, 2.r, 40), et l'appareil d'emballage (3) comprend un actionneur pivotant (59) pour le pivotement du dispositif de support d'objet (15) par rapport au cadre d'appareil d'emballage (2.1, 2.r, 40),
dans lequel l'étape de retrait de l'objet (B) du dispositif de support d'objet (15) comprend l'étape dans laquelle l'actionneur pivotant (59) pivote le dispositif de support d'objet (15) par rapport au cadre d'appareil d'emballage (2.1, 2.r, 40) autour d'un axe de pivotement de dispositif (12) parallèle à l'axe de rotation d'objet (CA) alors que l'objet (B) sur le dispositif de support d'objet pivoté (15) est tourné autour de l'axe central d'objet (CA) à la vitesse de rotation sélectionnée (v_B).

19. Procédé d'emballage selon l'une des revendications 16 à 18,
**caractérisé en ce que**
l'étape de rotation de l'objet (B) sur le dispositif de support d'objet (15) comprend l'étape dans laquelle une vitesse de rotation requise pour l'objet (B) est automatiquement sélectionnée selon la vitesse de déplacement mesurée actuelle (v),
au moins une fois une valeur indiquant la vitesse de rotation réelle (v_B) de l'objet (B) par rapport au cadre d'appareil d'emballage (2.1, 2.r, 40) est mesurée, et
le dispositif de rotation d'objet (10.f, 10.r) réalise la rotation d'objet selon

- la vitesse de rotation requise et
- la ou au moins une vitesse de rotation réelle mesurée (v_B).

FIG. 1

EP 3 199 016 B1

FIG. 2

3

39[ω_B]

C_B[v_B]

B

CA

46

60

55

49

10.r

47[ω_R]

13.l

41

12

47[ω_R]

59

10.f

TD[v]

2.l

26

4

G

32

11

1

6

5

Ch

FIG. 3

EP 3 199 016 B1

## REFERENCES CITED IN THE DESCRIPTION

### Patent documents cited in the description

- EP 2606715 A1
- EP 1138189 B1
- US 20080041028 A1
- FR 2585922 A1
- EP 2974592 A1
- US 4375187 A
- DE 3031865 C2